# EUROPÄISCHE PATENTSCHRIFT

(11) **EP 3 404 307 B1**
(45) Veröffentlichungstag und Bekanntmachung des Hinweises auf die Patenterteilung: **25.08.2021**
(21) Anmeldenummer: 17171991.7
(22) Anmeldetag: 19.05.2017
(51) Int. Cl.: F16L 43/00, F16L 47/32, B29C 45/16, B29C 45/26

(54) **FITTING**
FITTING
RACCORD

(43) Veröffentlichungstag der Anmeldung: 21.11.2018
(73) Patentinhaber: Geberit International AG, 8645 Jona (CH)
(72) Erfinder: Lippuner, Marc, 8645 Jona (CH)
(74) Vertreter: Frischknecht, Harry Ralph

(56) Entgegenhaltungen:
- EP-A1- 3 012 084
- DE-A1-102009 016 080
- JP-A- H05 164 287

## Beschreibung

### TECHNISCHES GEBIET

Die vorliegende Erfindung betrifft ein Fitting nach dem Oberbegriff von Anspruch 1.

### STAND DER TECHNIK

Aus dem Stand der Technik sind Fittings in vielen Formen bekannt. Beispielsweise sind Fittings in der Gestalt von T-Stücken oder Bogenstücken aus dem Stand der Technik bekannt geworden. Derartige Fittings dienen der Verbindung von winklig geneigt zueinander stehenden Leitungszweigstücken. Solche Fittings werden aus Metall oder Kunststoff gefertigt.

Viele Fittings aus dem Stand der Technik weisen dabei im Bereich des winklig geneigten Übergangs eine Form auf, welche grosse strömungstechnische Verluste bedingt. Die Form ist dabei meist herstellbedingt, weil die Bereiche des winklig geneigten Übergangs nicht für ein Werkzeug zugänglich, so dass diese Bereiche optimiert werden können.

Aus dem Stand der Technik sind Lösungen für dieses Problem bekannt geworden. Beispielsweise wird in der DE 10 2009 039 983 vorgeschlagen, den Fitting derart auszubilden, dass dieser schalenartig geteilt wird und dann die beiden Schalen mediendicht verbunden werden. Die schalenartige Teilung hat den Nachteil, dass eine verhältnismässig grosse Trennfläche zwischen den beiden Schalen vorhanden ist, was die Dauerhaftigkeit der Fittings negativ beeinträchtigt.

Aus der DE 10 2011 013 099 ist ein Fitting bekannt geworden, welcher innerhalb des Durchflusskanals einen Strömungsleitkörper umfasst, der Abzweigbereich strömungstechnisch verbessert. Allerdings ergeht aus der DE 10 2011 013 099 der Nachteil, dass die Fertigung ausgesprochen aufwändig ist.

Aus der EP 3 012 084 ist ein Fitting bekannt geworden, welcher einen Fittingkörper und einen daran angespritzten Einsatz aufweist.

### DARSTELLUNG DER ERFINDUNG

Ausgehend von diesem Stand der Technik liegt der Erfindung eine Aufgabe zugrunde, ein Fitting anzugeben, welches die Nachteile des Standes der Technik überwindet. Insbesondere soll ein Fitting angegeben werden, dessen Durchflusskanal bezüglich möglicher Druckverlusten optimiert ausgebildet ist und welches sich dennoch vorteilhaft herstellen lässt. Eine besonders bevorzugte Aufgabe ist es, ein Fitting mit einem Einsatz anzugeben, wobei der Einsatz möglichst gut mit dem Gehäuse in Verbindung steht.

Diese Aufgabe löst der Gegenstand von Anspruch 1. Demgemäss umfasst ein Fitting, insbesondere aus Kunststoff, eine Gehäusewand, die einen Durchflusskanal begrenzt, welcher sich von einem Fittingeingang zu einem Fittingausgang erstreckt, wobei der Durchflusskanal einen sich entlang einer ersten Mittelachse erstreckenden ersten Kanalabschnitt und einen sich entlang einer zweiten Mittelachse erstreckenden zweiten Kanalabschnitt umfasst. Im Bereich des Übergangs zwischen dem ersten Kanalabschnitt und dem zweiten Kanalabschnitt ist ein Einsatz in einen Durchbruch durch die Gehäusewand eingesetzt, welcher Einsatz stoffschlüssig mit der Gehäusewand in Verbindung steht. Die Gehäusewand weist im Bereich des Durchbruchs eine Anspritzzone auf und auch der Einsatz weist eine Anspritzzone auf. Über die beiden Anspritzzonen wird der Einsatz mit der Gehäusewand stoffschlüssig verbunden. Der Fitting und/oder die Gehäusewand weisen Elemente auf, welche eine Vergrösserung des Flächeninhalts der Anspritzzone ermöglichen.

Durch die Anordnung des besagten Elementes wird erreicht, dass der Flächeninhalt der Anspritzzone optimiert, sprich vergrössert, werden kann, so dass der Einsatz über die Anspritzzone optimal und insbesondere möglichst grossflächig mit der Gehäusewand verbunden werden kann.

Unter der Ausdrucksweise "Anspritzzone" wird der Kontaktbereich verstanden, über welchen Einsatz und Gehäusewand miteinander in Verbindung stehen. Typischerweise wird zuerst die Gehäusewand gespritzt, an welcher dann die Anspritzzone als physische Fläche vorhanden ist, wobei anschliessend der Einsatz über die Anspritzzone an die Gehäusewand angespritzt wird. Die Anspritzzone des Einsatzes wird dann direkt mit der Anspritzzone der Gehäusewand verbunden.

Eines der besagten Elemente ist mindestens ein von der Gehäusewand wegstehendes Flanschelement mit einem Teil der gehäuseseitigen Anspritzzone, wobei das Flanschelement auf mindestens einer Endseite des Durchbruchs angeordnet ist. Das besagte Element auf Seite des Einsatzes ist in dieser Ausführungsform mindestens ein einsatzseitiges Flanschelement mit einem Teil der einsatzseitigen Anspritzzone.

Die Flanschelemente erstrecken sich winklig geneigt, insbesondere rechtwinklig, zur besagten Mittelachse.

Eines der besagten Elemente ist mindestens ein von der Gehäusewand wegstehendes Kragenelement mit einem Teil der gehäuseseitigen Anspritzzone, wobei das Kragenelement sich seitlich zum Durchflusskanal bzw. zum Durchbruch erstreckt.

Das eine Element auf Seite des Einsatzes ist ein einsatzseitiges Kragenelement mit einem Teil der einsatzseitigen Anspritzzone.

Von der Gehäusewand erstreckt sich demnach sowohl das Flanschelement als auch das Kragenelement erstreckt und der Einsatz umfasst ebenfalls das Flanschelement und das Kragenelement.

Vorzugsweise ist in allen Ausführungsformen, die das Flanschelement aufweisen, auf jeder Endseite des Durchbruchs jeweils ein Flanschelement angeordnet. Das heisst, es sind zwei Flanschelemente vorhanden, die jeweils am Ende des Durchbruchs angeordnet sind. Hierdurch wird endseitig zum Durchbruch jeweils eine gute Verbindung zwischen Einsatz und Gehäuse erreicht.

Vorzugsweise sind die gehäuseseitigen Flanschelemente und die einsatzseitigen Flanschelement komplementär bzw. zueinander passend ausgebildet.

Vorzugsweise sind die beiden Flanschelemente am Ende des Durchbruchs bezüglich ihrer Form und Ausdehnung gleich zueinander ausgebildet.

Besonders bevorzugt ist die Anspritzzone des Flanschelementes winklig geneigt, insbesondere rechtwinklig, zur besagten Mittelachse orientiert ist.

Besonders bevorzugt handelt es sich bei der Anspritzzone des Flanschelementes um einen ebene Fläche. Alternativerweise kann die Anspritzzone des Flanschelementes aber auch mit Stufen oder anderen Elementen versehen sein, so dass die Anspritzzone flächenmässig noch vergrössert werden kann.

Vorzugsweise ist die Anspritzzone des Flanschelementes im Wesentlichen als halbe Ringfläche ausgebildet ist. Die halbe Ringfläche steht dabei vorzugsweise im Wesentlichen rechtwinklig zur jeweiligen Mittelachse, wobei die besagte Mittelachse jeweils die Mittelachse der halben Ringfläche bildet.

Vorzugsweise erstreckt sich auf jeder Seite des Durchbruchs bzw. des Durchflusskanals ein Kragenelement vom Durchflusskanal weg. Das heisst, dass jeweils seitlich zum Durchbruch bzw. zum Durchflusskanal auf beiden Seiten jeweils ein Kragenelement angeordnet ist.

Vorzugsweise sind die gehäuseseitigen Kragenelemente und die einsatzseitigen Kragenelemente komplementär bzw. zueinander passend ausgebildet.

Vorzugsweise sind die beiden Kragenelemente seitlich zum Durchbruch bezüglich ihrer Form und Ausdehnung im Wesentlichen gleich zueinander ausgebildet.

Besonders bevorzugt ist in der Ausführungsform mit dem Kragenelement und dem Flanschelement seitlich zum Durchflusskanal beidseitig je ein Kragenelement angeordnet und jeweils endseitig je ein Flanschelement. Das heisst, dass in dieser Ausführung der Durchbruch im Wesentlichen vollständig durch die Kombination Kragenelement und Flanschelement umgeben ist.

Vorzugsweise weist die Anspritzzone des Kragenelementes ein innerer Flächenabschnitt, der dem Durchflusskanal zugewandt ist, und ein äusserer Flächenabschnitt, der vom Durchflusskanal weg liegt, auf. Es kann auch nur der innere oder der äussere Flächenabschnitt angeordnet sein.

Unter der Ausdrucksweise "dem Durchflusskanal zugewandt" wird verstanden, dass der innere Flächenabschnitt mindestens teilweise zum Durchflusskanal gerichtet ist. Das heisst, der innere Flächenabschnitt kann vor dem Anspritzen des Einsatzes eine Art Fortsetzung der Oberfläche des Durchflusskanals bilden.

Unter der Ausdrucksweise "vom Durchflusskanal weg liegend" wird verstanden, dass der Flächenabschnitt vom Durchflusskanal entfernt angeordnet ist. Das heisst der Flächenabschnitt geht bevorzugt nicht direkt in die Oberfläche des Durchflusskanals über.

Vorzugsweise treffen der innere Flächenabschnitt und der äussere Flächenabschnitt bei einer Kante aufeinander, wobei die Kante leicht gerundet oder scharfkantig ausgebildet ist. Die Kante ist dabei vorzugsweise derart angeordnet, dass die Kante vom Einsatz überspritzt wird.

Vorzugsweise umfasst die Anspritzzone des Kragenelementes, insbesondere der äussere Flächenabschnitt, zwei winklig zueinander geneigte Flächenteile, wobei der Winkel zwischen den beiden Flächenteilen zwischen 90° und 145° oder zwischen 100° und 130° liegt. Durch die winklig geneigten Flächenteile kann die Oberfläche der Anspritzzone des Kragenelementes weiter erhöht werden. Zudem hat die winklige Anordnung den Vorteil, dass allfällig auftretende Kräfte zwischen der Gehäusewand und dem Einsatz in verschiedensten Richtungen aufgenommen werden können. Das heisst, die stoffschlüssige Verbindung zwischen Einsatz und Gehäusewand kann gut auf den Einsatz einwirkende Kräfte kompensieren.

Die Kante zwischen den beiden Flächenteilen ist vorzugsweise mit einer Rundung gerundet ausgebildet ist. Die Rundung erlaubt einen guten Übergang zwischen den beiden Flächenteilen und dient weiter der Erhöhung der Oberfläche.

Vorzugsweise ist das weiter vom Durchflusskanal entfernt liegende Flächenteil im Querschnitt gesehen nach aussen hin abfallend ausgebildet. Bei der Anordnung von zwei dem Durchflusskanal gegenüberliegenden Kragenelementen schliessen die zwei weiter vom Durchflusskanal entfernt liegenden Flächenteile von den zwei verschiedenen Kragenelementen einen Winkel von 170° bis 180° ein.

Vorzugsweise liegt die Anspritzzone oberhalb einer durch die eine Mittelachse verlaufenden Referenzebene. Die Referenzebene steht vorzugsweise rechtwinklig zur anderen Mittelachse.

Vorzugsweise sind das besagte mindestens eine Element und die Anspritzzone derart angeordnet, dass diese den Durchbruch im Wesentlichen vollständig umgeben. Das heisst, dass sich das mindestens eine Element und die Anspritzzone umseitig rund um den Durchbruch herum erstrecken. Bezüglich des Kragenelementes und des Flanschelementes heisst dies, dass diese derart angeordnet sind, dass rund um den Durchbruch herum sich entweder das Kragenelement oder das Flanschelement vom Durchbruch weg erstrecken.

Vorzugsweise steht das besagte mindestens eine Element, insbesondere das Kragenelement und/oder das Flanschelement, von der Aussenseite des Fittings bzw. von der Aussenseite des Einsatzes nach aussen hin ab. Das heisst, das besagte mindestens eine Element erstreckt sich von der Gehäusewand nach aussen hin weg. Durch diese Anordnung kann eine weitere Erhöhung der Oberfläche der Anspritzzone erreicht werden, wobei aufgrund des Wegerstreckens des besagten Elementes die benötige Materialmenge für die Herstellung des Fittings nur geringfügig erhöht werden muss.

Das besagte Element, insbesondere das Flanschelement bzw. das Kragenelement, bildet insbesondere eine Art Schenkel, welcher sich mit einer gewissen Dicke von der Gehäusewand wegerstreckt. Mit anderen Worten gesagt bildet das besagte Element einen Fortsatz, welcher sich von der Gehäusewand nach aussen hin weg erstreckt. Vorzugsweise weist das besagte mindestens eine Element, insbesondere das Flanschelement bzw. das Kragenelement, eine Breite quer zur Mittelachse auf, welche grösser als 50% des Innendurchmessers des Durchflusskanals ist.

Vorzugsweise ist das besagte mindestens eine Element, insbesondere das Flanschelement bzw. das Kragenelement, innenseitig durch eine innere Begrenzungskante und aussenseitig durch eine äussere Begrenzungskante begrenzt, wobei sich eine Mantellinie auf der Anspritzzone quer zu den Begrenzungskanten erstreckt, welche Mantellinie eine Länge aufweist, die grösser als 50% des Innendurchmessers des Durchflusskanals ist.

Vorzugsweise steht der Einsatz in allen Ausführungsform mit seiner Anspritzzone im Wesentlichen vollflächig mit der Anspritzzone des Gehäuseelementes in Verbindung.

Einsatz und Gehäusewand sind vorzugsweise aus dem gleichen oder einem gleichartigen Material hergestellt. Vorzugsweise ist der gesamte Fitting aus Kunststoff. Das heisst, dass die Gehäusewand und auch das Spritzmaterial für den Einsatz Kunststoff ist.

Vorzugsweise erstreckt sich eine Dichtfläche mindestens teilweise entlang des Durchbruchs. Die Dichtfläche erstreckt sich der mindestens teilweise derart entlang des Durchbruchs, so dass während der Herstellung des Einsatzes in Zusammenarbeit mit einem Kern eines Spritzgiesswerkzeuges ein Eindringen vom Spritzmaterial in den Durchflusskanal verhindert wird.

Die Anspritzzone liegt vorzugsweise auf der Seite der Dichtfläche, welche gegenüberliegend des Durchflusskanals liegt.

Die Dichtfläche sorgt also dafür, dass bei der Herstellung des Einsatzes, der in den Durchbruch eingesetzt wird, kein Spritzmaterial in den Durchflusskanal eindringen kann. Hierdurch wird verhindert, dass im Bereich des Durchbruchs während der Herstellung in unkontrollierter Art und Weise Strukturen im Inneren des Durchflusskanals entstehen, welche den Widerstand für durchfliessendes Wasser erhöhen würden.

Unter der Ausdrucksweise "in Zusammenarbeit mit einem Kern" wird verstanden, dass der Kern an der Dichtfläche entlang einer Dichtlinie oder über eine Dichtfläche anliegen kann, so dass kein Spritzmaterial zwischen Kern und Dichtfläche eindringen kann.

Vorzugsweise setzt sich die Dichtfläche in Richtung der Mittelachse des jeweiligen Abschnittes fort. Das heisst, die Dichtfläche erstreckt sich in Richtung der ersten Mittelachse aus dem ersten Kanalabschnitt in Richtung des zweiten Kanalabschnittes und in Richtung der zweiten Mittelachse aus dem zweiten Kanalabschnitt in Richtung des ersten Kanalabschnittes.

Vorzugsweise schliesst sich die Dichtfläche unmittelbar an die Innenwand des jeweiligen Abschnittes an und bildet eine Fortsetzung der Innenwand im Bereich des Durchbruchs.

Vorzugsweise verbleibt die Dichtfläche nach dem Herstellen des Einsatzes mindestens teilweise im Ursprungszustand. Vorzugsweise verbleibt der Teil der Dichtfläche, welcher von der Kontaktstelle mit dem besagten Kern innenseitig zum Durchflusskanal liegt, in seinem Ursprungszustand. Je nach Dimension bzw. Ausbildung der Dichtfläche kann der Teil der Dichtfläche, welcher von der Kontaktstelle mit dem besagten Kern aussenseitig zum Durchflusskanal liegt, mit dem Spritzmaterial verbunden werden, so dass dieser Teil der Dichtfläche nicht in seinem Ursprungszustand verbleibt.

Vorzugsweise ist die Dichtfläche eine vorbestimmte bzw. determinierte Fläche, welche am Bauteil als Dichtfläche identifizierbar ist.

Vorzugsweise ist die Dichtfläche von einer sich im Bereich des Übergangs der Dichtfläche anschliessenden der Innenwand des Durchflusskanals abgesetzt ist. Das heisst die Dichtfläche steht von der besagten Innenwand ab. Vorzugsweise ist die Dichtfläche im Bereich von 0.01 bis 0.5 Millimeter oder im Bereich von 0.02 bis 0.45 Millimeter von der Innenwand abgesetzt. Durch diese abgesetzte Ausbildung wird sichergestellt, dass der Kern einen guten und vor allem einen definierten Kontakt mit der Dichtfläche eingehen kann.

Vorzugsweise trifft die Dichtfläche, welche sich dem ersten Kanalabschnitt anschliesst, in einem Kreuzungsbereich auf die Dichtfläche, welche sich vom zweiten Kanalabschnitt weg erstreckt, auf.

Vorzugsweise umgibt die Dichtfläche den Durchbruch bezüglich des Durchflusskanals im Wesentlichen vollständig, so dass ein Eindringen von Spritzmaterial in den Durchflusskanal vollständig verhinderbar ist. Das heisst, dass bezüglich des Durchflusskanals eine Dichtwirkung bei der Herstellung des Einsatzes bereitgestellt wird, so dass ein Eindringen von Spritzmaterial in den Durchflusskanal verhindert werden kann.

Vorzugsweise ist im Bereich des Durchbruchs jeweils auf jeder Seite des Durchflusskanals eine Dichtfläche angeordnet ist. Das heisst, dass die Dichtflächen vorzugsweise bezüglich des Durchflusskanals gegenübereinander angeordnet sind.

Vorzugsweise sind die Dichtflächen bezüglich einer Symmetrieebene, die mittig durch den Durchbruch hindurch geht und sich durch die beiden Mittelachsen erstreckt, symmetrisch zueinander ausgebildet.

Vorzugsweise weist die Dichtfläche eine Breite auf, welche maximal 5% des Umfangs des Durchflusskanals entspricht. Als Breite wird die Ausdehnung der Dichtfläche quer zur jeweiligen Mittelachse verstanden.

Vorzugsweise weist die Anspritzzone einen Flächenbereich auf, der sich der Dichtfläche ausserhalb des Durchflusskanals anschliesst, welcher Flächenbereich insbesondere im unmittelbaren Anschluss an die Dichtfläche, bezüglich der Dichtfläche versetzt angeordnet ist, wobei durch die versetzte Anordnung ein Hohlraum geschaffen wird, in welchen Spritzmaterial bei der Herstellung des Einsatzes einfliessen kann. Die Anspritzzone liegt bezüglich des Durchflusskanals gesehen ausserhalb des Durchflusskanals. Mit anderen Worten schliesst sich der Dichtfläche ein Flächenbereich der Anspritzzone an, an welchen ein Teil des Einsatzes angespritzt wird, wobei sich die Anspritzzone bezüglich des Durchflusskanals nach aussen hin anschliesst und wobei die Anspritzzone sich vorzugsweise von der gesamten Länge der Aussenkante der Dichtfläche bezüglich des Durchflusskanals nach aussen erstreckt.

Vorzugsweise erstreckt sich die Anspritzzone entlang der bezüglich des Durchflusskanals aussenseitig liegenden Kante der Dichtfläche.

Vorzugsweise ist die Dichtfläche eine ebene bzw. eine plane Fläche. Alternativerweise ist die Dichtfläche konkav gerundet ausgebildet.

In einer ersten Ausführungsform des Fittings stehen die beiden Mittelachsen winklig geneigt, insbesondere rechtwinklig, zueinander und die beiden Kanalabschnitte sind derart angeordnet, dass sich deren Mittelachsen schneiden. Im Bereich des Übergangs zwischen dem ersten Kanalabschnitt und dem zweiten Kanalabschnitt ist eine innere Übergangskante vom ersten Kanalabschnitt zum zweiten Kanalabschnitt gebildet. Die Übergangskante ist mit einer Rundung gerundet ausgebildet. Der Einsatz ist gegenüber der Übergangskante derart angeordnet, dass die Übergangskante mit der Rundung während der Herstellung des Fittings durch einen Durchbruch, der vom Einsatz überdeckt wird, zugänglich ist.

Bei dieser ersten Ausführungsform handelt es sich um ein Winkelstück.

Vorzugsweise erstreckt sich das Kragelement seitlich zum Durchflusskanal entlang der Rundung und das Flanschelement ist stirnseitig im Endbereich des Durchbruches angeordnet.

Die Dichtflächen erstrecken sich in dieser Ausführungsform ebenfalls winklig geneigt zueinander, wobei der Winkel zwischen den Dichtflächen gleich ist wie der Winkel zwischen den beiden Mittelachsen.

Vorzugsweise erstreckt sich die Dichtfläche in dieser ersten Ausführungsform in Wesentlichen tangential zur besagten Rundung vom jeweiligen Rundungsanfang weg.

In einer zweiten Ausführungsform des Fittings stehen die beiden Mittelachsen kollinear zueinander. Weiter umfasst das Fitting einen dritten Kanalabschnitt, welcher sich entlang einer dritten Mittelachse erstreckt, wobei die dritte Mittelachse winklig geneigt, insbesondere rechtwinklig, zur ersten und zur zweiten Mittelachse verläuft. Im Bereich des Übergangs zwischen dem ersten Kanalabschnitt und dem dritten Kanalabschnitt ist eine erste innere Übergangskante vom ersten Kanalabschnitt zum dritten Kanalabschnitt gebildet, welche Übergangskante mit einer Rundung gerundet ausgebildet ist. Im Bereich des Übergangs zwischen dem zweiten Kanalabschnitt und dem dritten Kanalabschnitt ist eine weitere innere Übergangskante vom zweiten Kanalabschnitt zum dritten Kanalabschnitt gebildet, welche weitere Übergangskante mit einer Rundung gerundet ausgebildet ist. Der besagte Einsatz erstreckt sich mindestens von der Übergangskante zwischen dem ersten und zweiten Kanalabschnitt bis hin zur Übergangskante zwischen dem zweiten und dritten Kanalabschnitt.

Vorzugsweise erstreckt sich das Kragenelement seitlich zum Durchflusskanal entlang der ersten und der zweiten Mittelachse.

Vorzugsweise erstreckt sich die Dichtfläche in Richtung der ersten Mittelachse und der zweiten Mittelachse vom ersten Kanalabschnitt in den zweiten Kanalabschnitt hinein.

Vorzugsweise erstreckt sich der besagte Einsatz mindestens von der Übergangskante zwischen dem ersten und zweiten Kanalabschnitt bis hin zur weiteren Übergangskante zwischen dem zweiten und dritten Kanalabschnitt. Gleichermassen erstreckt sich die besagte Dichtfläche von der Übergangskante zwischen dem ersten und zweiten Kanalabschnitt bis hin zur weiteren Übergangskante zwischen dem zweiten und dritten Kanalabschnitt.

Die folgende Beschreibung einiger weiterer bevorzugter Merkmale bezieht sich sowohl auf die erste und/oder die zweite bevorzugte Ausführungsform bzw. auf alle zuvor beschriebenen Varianten des Fittings.

Der Durchbruch, welcher dann vom Einsatz vollständig überdeckt wird bzw. in welchen der Einsatz eingesetzt ist, stellt demnach eine Öffnung oder Fenster bereit, durch welches im Zuge der Herstellung des Fittings, ein Werkzeug in den Durchflusskanal eingeführt werden kann, um die besagte Rundung zu formen. Der Durchbruch wird im Zuge der Herstellung dann mit dem besagten Einsatz überdeckt. Insofern ist der Durchbruch während der Herstellung vorhanden und wird ebenfalls während der Herstellung mit dem Einsatz überdeckt.

Die Bildung des Durchbruches mit der anschliessenden Verschliessung durch den Einsatz hat den Vorteil, dass insbesondere die Übergangskante, an welcher die Rundung liegt, während der Herstellung zugänglich ist, was die Designfreiheit massiv erhöht. Insbesondere kann die Rundung sehr einfach und vor allem wirtschaftlich geformt werden. Die Innenkontur ist einfach entformbar.

Die Anordnung des Einsatzes hat viele Vorteile. Die Rundung kann so ausgebildet werden, dass diese möglichst strömungsoptimiert ist. Weiter kann der Einsatz während des Spritzgiessens hergestellt werden, wodurch ein aufwändiges und vor allem nachträgliches Anschweissen von zusätzlichen Teilen entfällt.

Der Einsatz erstreckt sich vorzugsweise ausschliesslich über einen Teilbereich der Gehäusewand, nämlich nur so, dass die Rundung durch ein Spritzgiesswerkzeug zugänglich ist. Der Einsatz erstreckt sich vorzugsweise ausschliesslich nur teilweise um die jeweilige Mittelachse bzw. die jeweiligen Mittelachsen herum, das heisst, dass ein vollständiges Umlaufen des Einsatzes um die Mittelachse nicht vorgesehen ist. Vorzugsweise ist der Einsatz so klein als möglich zu wählen, so dass er sich ausschliesslich derart erstreckt, dass die besagte Rundung bzw. die besagten Rundungen zugänglich sind.

Der Einsatz bildet einen Teil der Gehäusewand und verschliesst den für das Werkzeug vorgesehenen Durchbruch. Besonders bevorzugt weist der Einsatz mindestens im Bereich der Trennstelle zwischen Durchbruch und Einsatz eine Wandstärke auf, welche vorzugsweise der Wandstärke der benachbarten Bereiche der Gehäusewand entspricht. Der Einsatz wird vorzugsweise mit einem Spritzgiessverfahren in den Durchbruch eingespritzt und verbindet sich dabei mit der Gehäusewand.

Unabhängig von der Ausbildung mit zwei oder drei Kanalabschnitten ist es für die Form des Einsatzes bzw. des Durchbruches vorteilhaft, wenn die lichte Weite des Durchbruches derart ist, dass die Rundungen durch ein Werkzeug, welches den Durchbruch bildet und durch den Durchbruch bewegt wird, erreichbar sind.

Vorzugsweise erstreckt sich der erste Kanalabschnitt entlang der ersten Mittelachse gesehen bis hin zur Rundung zylindrisch mit im Wesentlichen konstantem Durchmesser. Der zylindrische Durchmesser geht dann in die Rundung über, wobei der Übergang durch einen Übergangspunkt definiert ist. Der Übergangspunkt ist ein geometrischer Ort auf einer Trennlinie des Übergangs vom zylindrischen Durchmesser in die Rundung, wobei der Übergangspunkt den Punkt auf der Trennlinie definiert, welcher von der zweiten Mittelachse am weitesten entfernt liegt. Der Einsatz erstreckt sich in Richtung der ersten Mittelachse vom zylindrischen Bereich, also im Wesentlichen vom Übergangspunkt, zur zweiten Mittelachse hin über die besagte Rundung hinweg. In Richtung der ersten Mittelachse gesehen weist der Einsatz also eine Länge auf, welche sich vom zylindrischen Bereich vorzugsweise bis hin zur zweiten Mittelachse oder - je nach Ausführung - über die zweite Mittelachse hinweg erstreckt. Alternativerweise erstreckt sich der Einsatz genau vom Übergangspunkt zwischen dem zylindrischen Bereich und der Rundung zur zweiten Mittelachse hin. In Richtung der ersten Mittelachse gesehen weist der Einsatz dann eine Länge auf, welche sich vom Übergangspunkt vorzugsweise bis hin zur zweiten Mittelachse oder über die zweite Mittelachse hinweg erstreckt.

Beim Fitting mit zwei Kanalabschnitten handelt es sich beispielsweise um einen Rohrbogen oder ein Winkelstück. Beim Fitting mit den drei Kanalabschnitten handelt es sich beispielsweise um ein T-Stück. Die Gehäusewand hat aussenseitig bei jedem der Kanalabschnitte die Form eines Anschlussstutzens. Folglich erstreckt sich jeder Kanalabschnitt innerhalb eines Anschlussstutzens, welcher durch die Gehäusewand bereitgestellt wird.

Bei einem Rohrbogen erstreckt sich der Einsatz auf der Bogenaussenseite vom Übergangspunkt zwischen dem zylindrischen Bereich des ersten Kanalabschnittes und der Rundung bis hin zum Übergangspunkt zwischen dem zylindrischen Bereich des dritten Kanalabschnittes und der Rundung. Auch hier kann sich der Einsatz leicht in den zylindrischen Bereich hinein erstrecken.

Bei einem T-Stück mit den drei Kanalabschnitten erstreckt sich der Einsatz vorzugsweise wie folgt: Der zweite Kanalabschnitt erstreckt sich entlang der zweiten Mittelachse gesehen bis hin zur Rundung zylindrisch mit im Wesentlichen konstantem Durchmesser. Der zylindrische Durchmesser geht dann in die Rundung über, wobei der Übergang durch einen Übergangspunkt definiert ist. Der Einsatz erstreckt sich in Richtung der zweiten Mittelachse vom zylindrischen Bereich zur dritten Mittelachse hin über die besagte Rundung hinweg. In Richtung der zweiten Mittelachse gesehen weist der Einsatz also eine Länge auf, welche sich vom zylindrischen Bereich vorzugsweise die dritte Mittelachse hinweg bis hin zum Übergangspunkt über im ersten Kanalabschnitt erstreckt. Der Einsatz kann sich über die besagten Übergangspunkte hinweg erstrecken. Alternativerweise erstreckt sich der Einsatz genau vom Übergangspunkt zwischen dem zylindrischen Bereich und der Rundung im zweiten Kanalabschnitt und demselben Übergangspunkt im ersten Kanalabschnitt.

Vorzugsweise erstreckt sich der Einsatz, insbesondere bei drei Kanalabschnitten, mindestens über die lichte Weite des dritten Kanalabschnittes bis über oder mindestens an den Rand der Rundung hinweg. Somit kann ein guter Zugang zum Übergangsbereich zwischen dem ersten Kanalabschnitt und dem dritten Kanalabschnitt bzw. zwischen dem zweiten Kanalabschnitt und dem dritten Kanalabschnitt geschaffen werden.

Der Einsatz erstreckt sich - in allen Ausführungen - besonders bevorzugt von Rundung zu Rundung. Der Einsatz überdeckt besonders bevorzugt gesehen im Wesentlichen die lichte Weite des dritten Kanalabschnittes bis an bzw. leicht über die Rundung, welche den Mündungsbereich vom ersten bzw. zweiten Kanalabschnitt in den dritten Kanalabschnitt umgibt.

Besonders bevorzugt ist genau ein einziger Einsatz vorhanden, welcher wie oben erwähnt einen Teil der Gehäusewand darstellt. Vorzugsweise nimmt der Einsatz bezüglich der Aussenfläche der Gehäusewand einen kleinen Teil von maximal einem Fünftel der gesamten Aussenfläche ein.

Die Gehäusewand und der Einsatz werden stoffschlüssig miteinander verbunden. Eine spätere Trennung zwischen Gehäusewand und Einsatz ist nicht vorgesehen. Es wird ein einstückiges Fitting bereitgestellt.

Die Gehäusewand und der Einsatz sind vorzugsweise aus demselben Kunststoff. Insbesondere aus derselben Farbe. Der Einsatz und die Gehäusewand können aber auch eine andere Farbe aufweisen. Beispielsweise können der Einsatz aus einem transparenten Kunststoff und die Gehäusewand aus einem opaken Kunststoff hergestellt sein.

Bei einem T-Stück erstreckt sich der Einsatz von einer Ebene, welche rechtwinklig zur dritten Mittelachse und durch die erste bzw. die zweite Mittelachse verläuft, bezüglich des dritten Kanalabschnittes weg, so dass der Einsatz gegenüber dem dritten Kanalabschnitt liegt.

Der Einsatz ist vorzugsweise schalenförmig ausgebildet. Bei einem T-Stück ist der Einsatz vorzugsweise als eine halbzylindrische Schale ausgebildet. Die halbzylindrische Schale erstreckt sich vorzugsweise um den halben Umfang des ersten und ggf. des zweiten Kanalabschnittes. Bei einem Rohrbogen weist die Schale die Form einer Teilschale der Aussenseite des Rohrbogens auf.

Vorzugsweise sind die Trennstellen zwischen der Gehäusewand und dem Einsatz als ebene oder gestufte Flächen ausgebildet. Die Flächen können dabei verschiedenartig orientiert sein und beispielsweise auch Hinterschnitte oder dergleichen aufweisen.

Die besagten Flächen der Trennstellen verlaufen vorzugsweise rechtwinklig oder parallel zu den Mittelachsen. Die Flächen können aber auch winklig geneigt zu den Mittelachsen verlaufen. Auch ist eine Kombination denkbar, beispielsweise können die Flächen der Trennstellen oder Teile der Trennflächen, rechtwinklig, parallel und winklig geneigt zu den besagten Mittelachsen verlaufen.

Vorzugsweise ist jeder der Kanalabschnitte aussenseitig mit einer Dichtkontur ausgebildet, auf welcher ein Rohr fluiddicht lagerbar ist. Die Dichtkontur ragt dabei in das Rohr ein und das Rohr wird gegen die Dichtkontur gepresst.

Der Radius der Rundung liegt vorzugsweise im Bereich von 20% bis 60%, insbesondere im Bereich von 30% bis 40%, des Innendurchmessers der jeweiligen Kanalabschnitte. Vorzugweise weisen alle Kanalabschnitte den gleichen Innendurchmesser auf.

Ein Spritzgiessverfahren zur Herstellung eines Fittings nach obiger Beschreibung ist dadurch gekennzeichnet,
dass in einem ersten Schritt die Gehäusewand ohne den Einsatz hergestellt wird, wobei pro Kanalabschnitt ein zylindrischer Kern bereitgestellt wird und wobei durch den Durchbruch, welcher vom Einsatz überdeckt wird, ein zusätzlicher Kern, insbesondere zur Bereitstellung der besagten Rundung durch die Gehäusewand in den Durchflusskanal einragt, und
dass in einem zweiten Schritt mindestens ein Kern entlang des ersten und/oder des zweiten Kanalabschnittes in den Durchflusskanal bis in Bereich des Durchbruches eingeschoben wird, wobei der Kern derart in Kontakt mit der Dichtfläche kommt, dass der Durchflusskanal bezüglich des mit dem Einsatz anzuspritzenden Spritzmaterial dicht verschlossen ist, und wobei der Durchbruch mit dem Einsatz zugespritzt wird.

Besonders bevorzugt werden die beiden Schritte in der gleichen Spritzgiessform ausgeführt. Die Form kann dabei vom gleichen Spritzaggregat oder von zwei verschiedenen Spritzaggregaten beschickt werden.

Beim Spritzgiessverfahren handelt es sich vorzugsweise um ein zweistufiges Spritzgiessverfahren.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Fittings gemäss einer ersten Ausführungsform;
- Fig. 2: eine teilweise geschnittene Ansicht des Fittings nach Figur 1;
- Fig. 3: eine weitere geschnittene Ansicht des Fittings nach den vorhergehenden Figuren mit einer vergrösserten Detailansicht;
- Fig. 4: eine Schnittdarstellung des Fittings mit eingeschobenem Kern;
- Fig. 5: die Schnittdarstellung nach Figur 4 ohne des Kerns;
- Fig. 6a/b/c: weitere Schnittansichten des Fittings ohne den Kern (Fig. 6a/6b) und mit dem Kern (Fig. 6c); und
- Fig. 7a/7b: perspektivische Ansichten eines Fittings gemäss einer zweiten Ausführungsform.

### BESCHREIBUNG BEVORZUGTER AUSFÜHRUNGSFORMEN

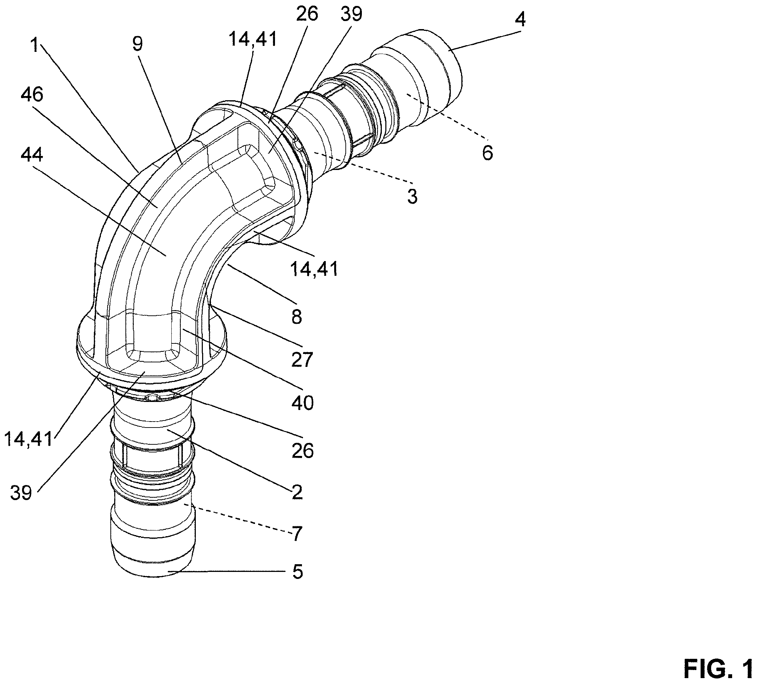

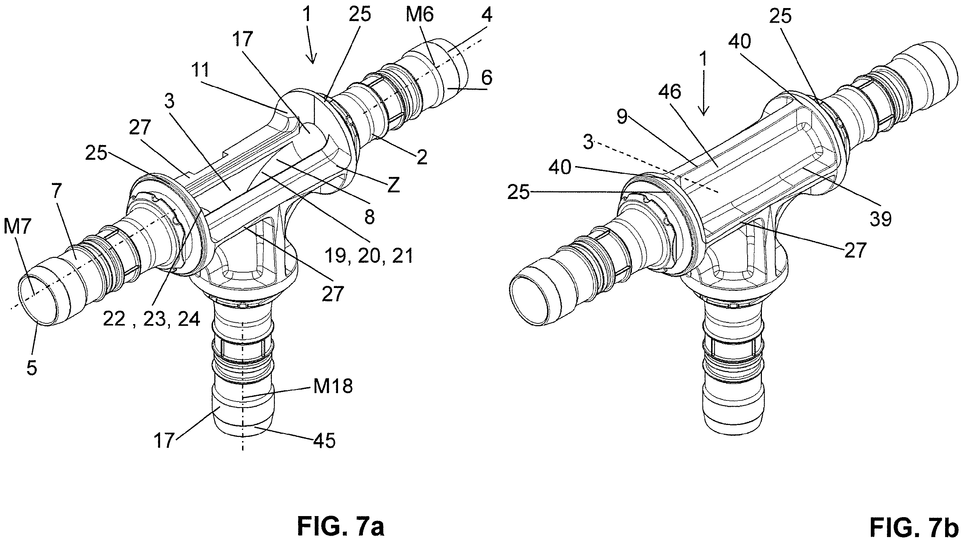

Die Figuren 1 bis 6c zeigen eine erste Ausführungsform eines Fittings in der Gestalt eines Winkelstückes und die Figuren 7a und 7b zeigen eine zweite Ausführungsform eines Fittings in der Gestalt eines T-Stückes.

Das Fitting 1 gemäss beiden Ausführungsformen umfasst eine Gehäusewand 2, die einen Durchflusskanal 3 begrenzt, welcher sich von einem Fittingeingang 4 zu einem Fittingausgang 5 erstreckt. Der Durchflusskanal 3 weist einen sich entlang einer Mittelachse M6 erstreckenden ersten Kanalabschnitt 6 und einen sich entlang einer zweiten Mittelachse M7 erstreckenden zweiten Kanalabschnitt 7 auf. Im Bereich des Überganges zwischen dem ersten Kanalabschnitt 6 und dem zweiten Kanalabschnitt 7 ist ein Einsatz in einem Durchbruch 11 durch die Gehäusewand 2 eingesetzt. Der Einsatz 9 ist stoffschlüssig mit der Gehäusewand 2 in Verbindung. Der Einsatz 9 überdeckt dabei den Durchbruch 11 im Wesentlichen vollständig.

In der ersten Ausführungsform stehen die beiden Mittelachsen M6, M7 winklig geneigt, hier rechtwinklig, zueinander. In der zweiten Ausführungsform stehen die beiden Mittelachsen, M6, M7 kollinear zueinander, wobei in der zweiten Ausführungsform noch ein dritter Kanalabschnitt 18 vorgesehen ist, welcher sich entlang einer dritten Mittelachse M18 erstreckt und winklig geneigt, hier rechtwinklig, zur ersten Mittelachse M6 und zur zweiten Mittelachse M7 steht. Der dritte Kanalabschnitt 18 weist einen weiteren Fittingausgang 45 auf.

Bei beiden Ausführungsformen weist die Gehäusewand 2 im Bereich Durchbruchs 11 eine Anspritzzone 14 auf. Auch weist der Einsatz 9 eine Anspritzzone 41 auf. Über diese Anspritzzonen 14, 41 wird der Einsatz 9 an die Gehäusewand 2 angespritzt, sodass der Durchbruch 11 entsprechend überdeckt ist. Im zusammengefügten Zustand entsteht eine stoffschlüssige Verbindung zwischen der Gehäusewand 2 und dem Einsatz 9 im Bereich der Anspritzzone 14 der Gehäusewand 2 und der Anspritzzone 41 des Einsatzes 9. Die beiden Anspritzzonen 14, 41 sind vorzugsweise deckungsgleich bzw. komplementär zueinander, so dass ein Kontakt über die gesamte Ausdehnung der Anspritzzone 14, 41 bereitgestellt werden kann.

Bei beiden Ausführungsformen weist die Gehäusewand 2 sowie der Einsatz 9 weiterhin mindestens ein Element 26, 27, 39, 40 auf, welches eine Vergrösserung des Flächeninhaltes der Anspritzzone 14, 41 ermöglicht. Das heisst, mit dem Element 26, 27, 39, 40 kann die Oberfläche der Anspritzzone 14 entsprechend erhöht werden, sodass zwischen dem Einsatz 9 und der Gehäusewand 2 ein flächenmässig vergrösserter flächiger Kontakt ermöglicht wird. Hierdurch wird die Verbindung zwischen dem Einsatz 9 und der Gehäusewand 2 verbessert.

Folglich wird durch die Ausbildung der Anspritzzone 14 an der Gehäusewand 2 und durch die Anspritzzone 41 am Einsatz 9 die Kontaktfläche zwischen dem Einsatz 9 und der Gehäusewand 2 entsprechend vergrössert, was die Verbindung zwischen Einsatz 9 und Gehäusewand 2 verbessert.

In der gezeigten Ausführungsform werden zwei Elemente 26, 27 an der Gehäusewand 2 sowie zwei Elemente 39, 40 am Einsatz 9 jeweils in Kombination miteinander gezeigt. Je nach Konfiguration des Fittings 1 ist es aber auch denkbar, nur eines dieser beiden Elemente 26, 27 einzusetzen. In der Folge wird das Element 26 und 39 jeweils als Flanschelement und das Element 27 und 40 jeweils als Kragenelement bezeichnet.

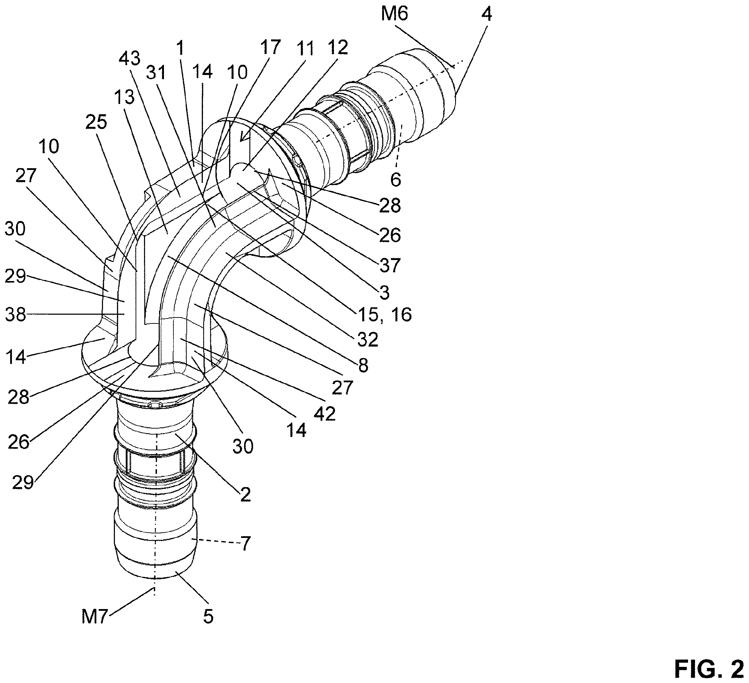

In den Figuren 1 und 7b wird der jeweilige Fitting in mit dem Einsatz 9 in Verbindung stehendem Zustand gezeigt. In den Figuren 2 und 7a wird der Einsatz 9 nicht gezeigt, das heisst die Gehäusewand 2 wird in unverbundenem Zustand gezeigt.

In den gezeigten Ausführungsformen ist, wie von den Figuren 1, 2, 7a und 7b ersichtlich, jeweils auf der Endseite 28 des Durchbruches 11 je ein Flanschelement 26 angeordnet. Das Flanschelement 26 begrenzt dabei den Durchbruch 11 in Richtung der entsprechenden Mittelachse M6, M7. Auch ist am Einsatz 9 ein Flanschelement 39 angeordnet, welches einen Teil der einsatzseitigen Anspritzzone 41 bereitstellt. Das Flanschelement 26 und 39 erstreckt sich in der gezeigten Ausführungsform rechtwinklig zur besagten Mittelachse M6, M7. Die gesamte dem Durchbruch 11 zugewandte Oberfläche des besagten Flanschelement 26 und 39 stellt einen Teil der Anspritzzone 14, 41 bereit. In der gezeigten Ausführungsform ist die Anspritzzone 14, 41 des Flanschelementes 26 und 39 im wesentlichen als halbe Ringfläche ausgebildet.

Weiter sind zusätzlich zu den beiden Flanschelementen 26 zwei Kragenelemente 27 angeordnet, welche sich seitlich vom Durchflusskanal 3 wegerstrecken. Weitere Kragenelemente 40 erstrecken sich vom Einsatz 9. Die Oberfläche des Kragenelementes 27, 40 stellt ebenfalls einen Teil der Anspritzzone 14, 41 bereit. Die Anspritzzone 14, 41 des Kragenelementes 27, 40 erstreckt sich im Wesentlichen neben dem Durchflusskanal 3.

Zusammengefasst stellen das Flanschelement 26 und das Kragenelement 27 die besagte Anspritzzone 14 sowie das Flanschelement 39 und das Kragenelement 40 die besagte Anspritzzone 41 bereit, über welche Anspritzflächen 14, 41 der Einsatz 9 mit der Gehäusewnad 2 verbunden wird. Insbesondere stellen die Oberseiten vom Flanschelement 26, 39 und vom Kragenelement 27, 40 die Anspritzzone 14 bereit.

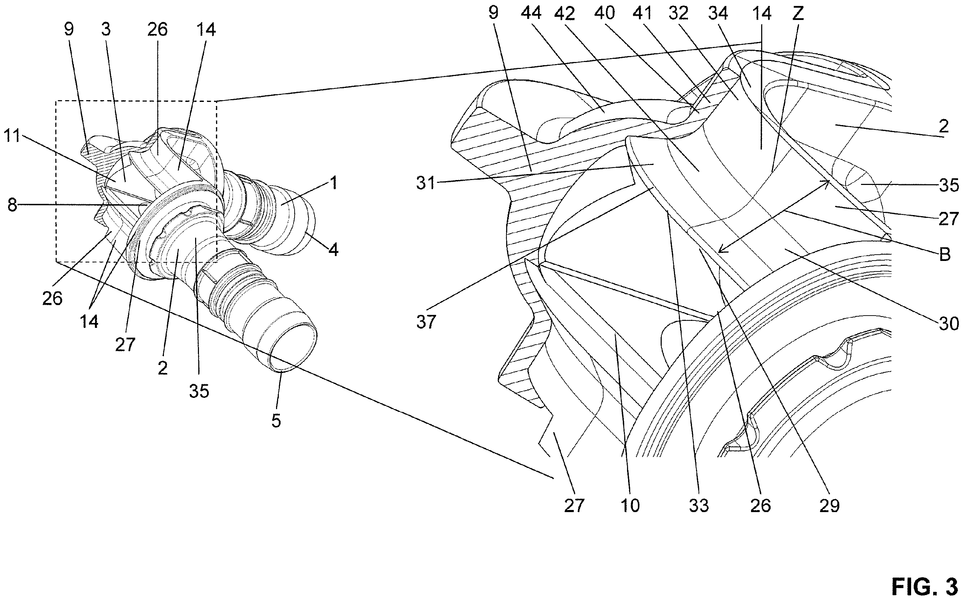

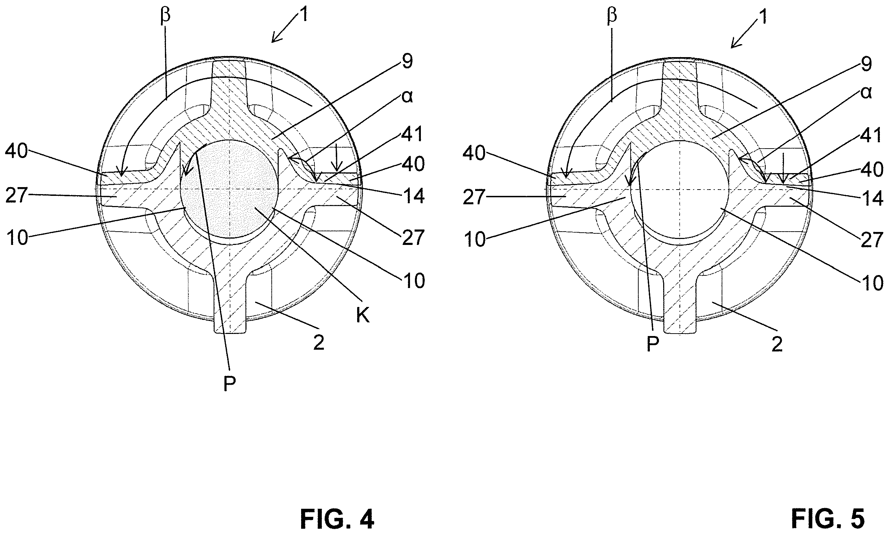

Bezüglich der Form der Anspritzzone 14 des Kragenelementes 27 wird auf die Figur 3 sowie auf die Figuren 4 und 5 verwiesen. Die Anspritzzone 14 des Kragenelements 27 weist einen inneren Flächenabschnitt 29 und einen äusseren Flächenabschnitt 30 auf. Der innere Flächenabschnitt 29 ist in dem Durchflusskanal 3 zugewandt. Das heisst, der Flächenabschnitt 29 ist gegen den Durchflusskanal 3 gerichtet. Der äussere Flächenabschnitt 30 liegt vom Durchflusskanal 3 weg und erstreckt sich im wesentlichen vom Durchflusskanal 3 weg. Die Form der Anspritzzone 41 ist komplementär zur Anspritzzone 14 ausgebildet.

Der innere Flächenabschnitt 29 und der äussere Flächenabschnitt 30 treffen bei einer Kante 37 aufeinander. Die Kante 37 kann verschiedenartig ausgebildet sein. In der gezeigten Ausführungsform ist die Kante 37 links vom Durchbruchkanal 3 scharfkantig ausgebildet und die Kante 37 rechts vom Durchflusskanal 3 ist leicht gerundet ausgebildet. Dies kann herstellungstechnische Gründe haben. Die Kante 37 links und rechts kann aber auch gleichartig ausgebildet sein. Die Kante 37 geht in der gezeigten Ausführungsform in das Flanschelement 26 über.

Der äussere Flächenabschnitt 30 des Kragenelementes 27 bzw. die Anspritzzone 41 des Kragenelementes 27 weist aussenseitig zwei winklig geneigt zueinander ausgebildete Flächenteile 31, 32 auf. Der Winkel α zwischen den Flächenteilen 31, 32 ist zwischen 90° und 145° oder zwischen 100° und 130°.

Die Kante 42 zwischen den beiden Flächenteilen 31, 32 ist in der gezeigten Ausführungsform ebenfalls mit einer Rundung ausgebildet.

Das weiter vom Durchflusskanal 3 entfernt liegende Flächenteil 31 ist im Querschnitt gesehen nach aussen hin abfallend ausgebildet. Dies kann gut in den Figuren 4 und 5 erkannt werden. Bei der Anordnung von zwei den Durchflusskanal 3 gegenüberliegenden Kragenelementen 27, sowie in den Figuren gezeigt, schliessen die beiden winklig liegenden Flächenteile 32 in einem Winkel β von 170° bis 180°zueinander.

Von der gezeigten Ausführungsform kann gut erkannt werden, dass das Kragenelement 27 als auch das Flanschelement 26 derart angeordnet sind, dass sich die beiden Elemente 26, 27 im Wesentlichen vollständig um den Durchbruch 11 herumerstrecken. Dies ist sowohl bei der ersten als auch bei der zweiten Ausführungsform.

Weiter steht das mindestens eine Element 26, 27 von der Aussenseite 35 der Gehäusewand 2 des Fittings 1 nach aussen hin weg. Gleiches gilt für das mindestens eine Element 39, 40, welches ebenfalls von der Aussenseite 44 des Einsatzes 9 wegsteht. Das mindestens eine Element 26, 27 bzw. 39, 40 kann dabei als von der Aussenwand hervorstehend bzw. auskragend bezeichnet werden. Dies hat den Vorteil, dass eine entsprechende Materialoptimierung stattfinden kann. So kann die Gehäusewand 2 zwischen den beiden Elementen 26, 27 bzw. 39, 40 mit geringerer Dicke ausgebildet werden und dennoch kann eine erhöhte Anspritzzone 14, 41 erreicht werden.

Der Einsatz weist in der gezeigten Ausführungsform ein einsatzseitiges Flanschelement 39 und/oder ein einsatzseitiges Kragenelement 40 auf. Sowohl das einsatzseitige Flanschelement 39 als auch das einsatzseitige Kragenelement 40 weisen die besagte Kontaktfläche 41 auf, welche mit der Anspritzzone 14 in flächigen Kontakt kommt. Gleichermassen ist das einsatzseitige Flanschelement 39 komplementär zum Flanschelement 26 und das einsatzseitige Kragenelement 40 ist komplementär zum Kragenelement 27 ausgebildet.

Vorzugsweise weist das besagte mindestens eine Element 26, 27 eine Breite B quer zur Mittelachse M6, M7 aufweist, welche grösser als 50% des Innendurchmessers des Durchflusskanals 3 ist.

Die Anspritzzone 14 des besagten mindestens einen Element 26, 27 ist innenseitig durch eine innere Begrenzungskante 33 und aussenseitig durch eine äussere Begrenzungskante 34 begrenzt. Eine Mantellinie Z erstreckt sich auf der Anspritzzone 14 quer zu den Begrenzungskanten 33, 34. Die Mantellinie Z weist eine Länge auf, die grösser als 50% des Innendurchmessers des Durchflusskanals 3 ist. Gleiches gilt für den besagten Kontaktbereich 41 des Einsatzes 9.

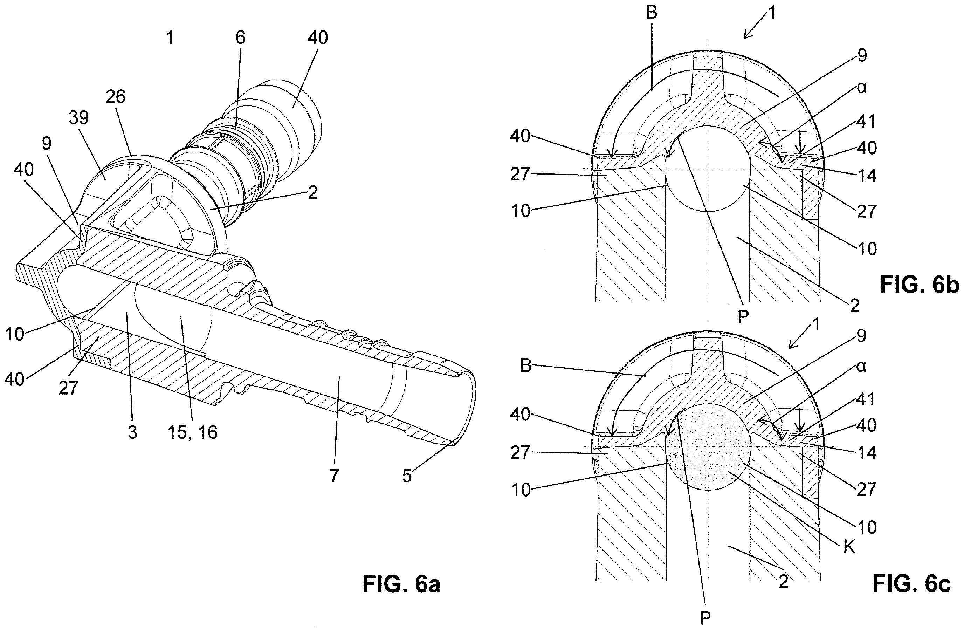

Von den Figuren 4 und 5 sowie von den Figuren 6a bis 6c wird die Herstellung des Fittings 1 noch genauer gezeigt.

In einem ersten Schritt wird die Gehäusewand 2 ohne den Einsatz 11 hergestellt, wobei pro Kanalabschnitt 6, 7, 18 ein zylindrischer Kern K bereitgestellt wird und wobei durch den Durchbruch 11, welcher vom Einsatz 9 überdeckt wird, ein zusätzlicher Kern, einragt. Der zusätzliche Kern dient der Bereitstellung der Innenform des Durchflusskanals 3, insbesondere von der besagten Rundung 10. In den Figuren 4 und 6c wird der Kern K als graue Fläche symbolisiert.

In einem zweiten Schritt wird mindestens ein Kern K entlang des ersten und/oder des zweiten Kanalabschnittes 6, 7 in den Durchflusskanal 3 bis in Bereich des Durchbruches 11 eingeschoben wird, so dass der Einsatz 9 an die Anspritzzone 14 angespritzt wird.

Bei beiden Ausführungsformen ist eine optionale Dichtfläche 10 angeordnet. Die Dichtfläche 10 arbeitet während der Herstellung des Einsatzes 9 mit mindestens einem Kern K eines Spritzgiesswerkzeuges zusammen. Die Dichtfläche 10 erstreckt sich mindestens teilweise entlang des Durchbruchs 11 derart, dass während der Herstellung des Einsatzes 9 in Zusammenarbeit mit mindestens einem Kern eines Spritzgiesswerkzeuges ein Eindringen von Spritzmaterial in den Durchflusskanal 3 verhindert wird. Das heisst, der mindestens eine Kern eines Spritzgiesswerkzeuges schmiegt sich an die Dichtfläche 10 an, derart dass im Zusammenarbeit mit der Oberfläche des mindestens einem Kerns und der Dichtfläche 10 eine Dichtlinie bereitgestellt wird, so dass kein Spritzmaterial von aussen in den Durchflusskanal eindringen kann. Das heisst, das Spritzmaterial kann nicht von der Stelle, an welche der Einsatz 9 herzustellen ist, in das Innere des Durchflusskanals 3 eindringen. Dies weist den Vorteil auf, dass die Geometrie des Durchflusskanals 3 im Bereich, in welchem der Einsatz 9 zu liegen kommt bzw. in daran angrenzenden Bereichen, nicht negativ durch unkontrolliert einfliessendes Dichtmaterial beeinflusst wird. Der Einsatz 9 kann demnach ohne negative Beeinflussung des Durchflusskanals hergestellt werden.

Das heisst, dass der Kern K derart in Kontakt mit der Dichtfläche 10 kommt, dass der Durchflusskanal 3 bezüglich des mit dem Einsatz 9 anzuspritzenden Spritzmaterial dicht verschlossen ist, und wobei der Durchbruch 11 mit dem Einsatz 9 zugespritzt wird.

Anhand der Figuren wird nun die Ausgestaltung der Dichtfläche 10 gemäss der ersten Ausführungsform genauer erläutert. Die Dichtfläche 10 setzt sich, wie von der Figur 2 ersichtlich, in Richtung der Mittelachse M6 bzw. M7 vom ersten Kanalabschnitt 6 bzw. vom zweiten Kanalabschnitt 7 fort. In der ersten Ausführungsform setzt sich vom ersten Kanalabschnitt 6 ein erster Abschnitt 27 der Dichtfläche 10 im Wesentlichen parallel zur Mittelachse M6 fort. Vom zweiten Kanalabschnitt 7 setzt sich ein weiterer Abschnitt 28 der Dichtfläche 10 ebenfalls im Wesentlichen parallel zur Mittelachse M7 fort. In einem Kreuzungsbereich 25 trifft der vom ersten Kanalabschnitt 6 fortlaufende Abschnitt und der vom zweiten Kanalabschnitt 7 sich erstreckende Abschnitt der Dichtfläche 10 aufeinander. Die Dichtfläche 10 erstreckt sich ohne Unterbruch vom ersten Kanalabschnitt 6 zum zweiten Kanalabschnitt 7. Da die beiden Kanalabschnitte 6, 7 in der ersten Ausführungsform winklig geneigt zueinander stehen, stehen auch die beiden Abschnitte 27, 28 der Dichtfläche 10 winklig geneigt zueinander.

In der Figur 4 und auch in der Figur 6c werden Schnittdarstellungen gezeigt, in welchen der Kern K des Spritzgiesswerkezuges dargestellt wird. Der Kern K erstreckt sich dabei von den Kanalabschnitten 6, 7 in den Bereich, in welchem der Einsatz 9 geformt wird, also in den Bereich des Durchbruchs 11, hinein. Typischerweise erstreckt sich von jedem Kanalabschnitt 6, 7 her, je ein Kern K in den entsprechenden Bereich hinein. In der Figur 3 und 6c kann gut erkannt werden, wie sich die Aussenseite 26 des Kerns K an die Dichtfläche 10 anschmiegt und so ein verhindern des Eindringens von Spritzmaterials, mit welchem der Einsatz 9 hergestellt wird, verhindert werden kann. Das heisst, das Spitzmaterial kann nicht entlang des Pfeils P in den Durchflusskanal 3 eindringen.

Die Dichtfläche 10 schliesst sich, wie in der Figur 2 gezeigt, unmittelbar an die Innenwand 12 des jeweiligen Abschnittes des Durchflusskanals 3 an und bildet eine Fortsetzung der Innenwand 12 in den Durchbruch 11 hinein. Bezüglich des Umfangs gesehen setzt sich ein Teil der Oberfläche der Innenwand 12 der Kanalabschnitte 6 und 7 in den Bereich des Durchbruchs 11 fort.

In der Figur 7a wird die Ausbildung der Dichtfläche 10 gemäss der zweiten Ausführungsform gezeigt. Hier erstreckt sich die Dichtfläche 10 ebenfalls vom ersten Kanalabschnitt 6 sowie vom zweiten Kanalabschnitt 7 in den Bereich des Durchbruchs 11 hinein. Da die beiden Kanalabschnitt 6, 7 kollinear zueinander verlaufen, erstreckt sich der von dem ersten Kanalabschnitt 6 her führende Abschnitt 27 der Dichtfläche 10 sich ebenfalls kollinear zum Abschnitt 18 der Dichtfläche 10, welcher vom zweiten Kanalabschnitt 7 in den Durchbruch 11 hinein geführt wird. Das heisst, die Dichtfläche 10 weist gemäss der zweiten Ausführungsform nicht einen Kreuzungsbereich auf, wie dies bei der ersten Ausführungsform der Fall ist.

Mindestens einige Teile der Dichtfläche 10 verbleiben bei beiden Ausführungsformen nach dem Herstellen des Einsatzes 9 mindestens teilweise im Ursprungszustand. Das heisst, die Dichtfläche 10 ist auch nach der Fertigung des Einsatzes 9 mindestens teilweise noch erkennbar. Typischerweise bleiben die Teile der Dichtfläche 10 im Ursprungszustand, welche bezüglich der Dichtlinie zwischen dem Kern K und der Dichtfläche 10 im Inneren des Durchflusskanals 3 liegen. Die anderen Teile der Dichtfläche 10, welche bezüglich der Dichtlinie zwischen dem Kern K und der Dichtfläche 10 ausserhalb des Durchflusskanals 3 liegen, verbleiben nicht im Ursprungszustand, weil hier entsprechendes Spritzmaterial angespritzt wird.

Von der Innenwand 13, welche die Innenwand 13 des Durchflusskanals 3 im Bereich des Übergangs 8 ist, ist die Dichtfläche 10 bei beiden Ausführungsformen abgesetzt ausgebildet. Das heisst, dass die Dichtfläche 10 bezüglich der besagten Innenwand 13 erhaben ausgebildet ist bzw. dass die Dichtfläche 10 von der Innenwand 13 erhöht ausgebildet ist bzw. einen Absatz von der Innenwand 13 bildet. Vorzugsweise ist die Dichtfläche 10 im Bereich von 0.01 bis 0.5 Millimeter oder im Bereich von 0.02 bis 0.45 Millimeter von der Innenwand 13 abgesetzt. Diese Absetzung hat den Vorteil, dass eine determinierte Dichtfläche geschaffen wird.

Die Dichtfläche 10 umgibt den Durchbruch 11 bezüglich des Durchflusskanals 3 im Wesentlichen vollständig. Bei beiden Ausführungsformen sind jeweils zwei Dichtflächen 10 bezüglich des Durchflusskanals 3 gegenübereinander angeordnet. Im Bereich des Durchbruchs 11 ist also auf jeder Seite des Durchflusskanals 3 eine Dichtfläche 10 angeordnet. Ein Eindringen von Spritzmaterial in den Durchflusskanal 3 ist durch die besagte Anordnung verhinderbar, weil eine Dichtlinie entlang der Innenwand 13 des Durchflusskanals 3 im Bereich des Durchbruches 11 bereitstellbar ist.

Die Dichtfläche 10 weist vorzugsweise eine Breite B auf, welche maximal 5 % des Umfangs des Durchflusskanals 3 entspricht. Die Breite B ist dabei ein Mass, welches sich im Wesentlichen quer zur jeweiligen Mittelachse M6, M7 erstreckt.

Die Dichtfläche 10 ist in hier in beiden Ausführungsformen stegartig ausgebildet.

Der Dichtfläche 10 schliesst sich ausserhalb des Durchflusskanals 3 ein Teil der besagten Anspritzzone 14 an. Die Anspritzzone 14 ist hier mit einem Flächenbereich 38 bezüglich der Dichtfläche 10 versetzt angeordnet. Das heisst, die Dichtfläche 10 setzt sich von der Anspritzzone 14 ab. Es wird dabei durch diese versetzte Anordnung ein Hohlraum 43 geschaffen, in welchem Spritzmaterial bei der Herstellung des Einsatzes 9 einfliessen kann. Dieser Hohlraum wird in der Figur 2 entsprechend gezeigt. Gleichermassen wird auch bei der zweiten Ausführungsform ein entsprechender Hohlraum 43 geschaffen.

Die Dichtfläche 10 ist bezüglich ihrer Oberfläche eben oder plan ausgebildet. Das heisst, die Dichtfläche 10 kann eine plane beziehungsweise eine ebene Fläche sein. Alternativerweise kann die Dichtfläche 10 auch konkav gerundet ausgebildet sein, wobei der Radius der Rundung vorzugsweise im Wesentlichen dem Radius des Kern entspricht.

Wie bereits erläutert, stehen die beiden Mittelachsen, M6, M7 in der ersten Ausführungsform winklig geneigt zueinander. Insbesondere stehen die beiden Mittelachsen, M6, M7 rechtwinklig zueinander und die beiden Kanalabschnitte, 6, 7 sind ebenfalls rechtwinklig zueinander orientiert. Die beiden Kanalabschnitte sind beide derart angeordnet, dass sich deren Mittelachsen M6, M7 schneiden. Im Bereich des Übergangs 8 zwischen dem ersten Kanalabschnitt 6 und dem zweiten Kanalabschnitt 7 wird eine innere Übergangskante 15 vom ersten Kanalabschnitt 6 zum zweiten Kanalabschnitt 7 gebildet. Die innere Übergangskante 15 ist mit einer Rundung 16 ausgebildet. Die Rundung 16 weist den Vorteil auf, dass der Übergang zwischen dem ersten Kanalabschnitt 6 und dem zweiten Kanalabschnitt 7 möglichst strömungsoptimiert ausgebildet werden kann. Der Einsatz 9 ist gegenüber der Übergangskante 15 derart angeordnet, dass die Übergangskante 15 mit der Rundung 16 während der Herstellung des Fittings durch den Durchbruch 11, der vom Einsatz 9 überdeckt wird, zugänglich ist.

In den Figuren 7a und 7b wird die zweite Ausführungsform in der Form des T-Stückes gezeigt. Wie bereits erwähnt erstrecken sich hier die beiden Mittelachsen M6, M7 des ersten Kanalabschnittes 6 und des zweiten Kanalabschnittes 7 kollinear zueinander. Des Weiteren ist ein dritter Kanalabschnitt 18 angeordnet, welcher sich entlang einer dritten Mittelachse M18 erstreckt. Die dritte Mittelachse M18 steht winklig geneigt, insbesondere rechtwinklig zur ersten und zweiten Mittelachse M6, M7. Die drei Mittelachsen, M6, M7 und M18 schneiden sich an einem gemeinsamen Ort.

Im Bereich des Übergangs 19 zwischen dem ersten Kanalabschnitt 6 und dem dritten Kanalabschnitt 18 ist eine erste innere Übergangskante 20 angeordnet. Die Übergangskante 20 ist mit einer Rundung 21 ausgebildet. Im Bereich des Übergangs 22 zwischen dem zweiten Kanalabschnitt 7 und dem dritten Kanalabschnitt 18 ist eine weitere innere Übergangskante 23 angeordnet. Die Übergangskante 23 ist mit einer Rundung 24 ausgebildet. Der besagte Einsatz 11 erstreckt sich von der Übergangskante 20 zwischen dem ersten Kanalabschnitt 6 und dem dritten Kanalabschnitt 18 bis hin zur Übergangskante 23 zwischen dem zweiten Kanalabschnitt 7 und dem dritten Kanalabschnitt 18. Die Dichtfläche 10 erstreckt sich in Richtung der ersten Mittelachse M6 und der zweiten Mittelachse M7 vom ersten Kanalabschnitt in den zweiten Kanalabschnitt hinein. Die Dichtfläche 10 dichtet also im Wesentlichen den Übergangsbereich zwischen den drei Kanalabschnitten von dem Bereich, in welchem der Einsatz 9 zu liegen kommt, in Richtung des Durchflusskanals 3 ab.

Bei beiden Ausführungsformen erstreckt sich die Dichtfläche 10 tangential zur Rundung 16, 21, 24 vom jeweiligen Rundungsanfang 17 weg.

Beide Ausführungsformen weisen vorzugsweise eine Dichtstruktur 34 auf, welche aussenseitig angeordnet ist.

Der Einsatz 9 kann aussenseitig mindestens eine Verstärkungsrippe 46 aufweisen.

**BEZUGSZEICHENLISTE**

| | | | |
|---|---|---|---|
| 1 | Fitting | 30 | äusserer Flächenabschnitt |
| 2 | Gehäusewand | 31 | Flächenteil |
| 3 | Durchflusskanal | 32 | Flächenteil |
| 4 | Fittingeingang | 33 | innere Begrenzungskante |
| 5 | Fittingausgang | 34 | äussere Begrenzungskante |
| 6 | erster Kanalabschnitt | 35 | Aussenseite |
| 7 | zweiter Kanalabschnitt | 37 | Kante |
| 8 | Übergang | 38 | Flächenbereich |
| 9 | Einsatz | 39 | einsatzseitiges Flanschelement |
| 10 | Dichtfläche | | |
| 11 | Durchbruch | 40 | einsatzseitiges Kragenelement |
| 12 | Innenwand | | |
| 13 | Innenwand | 41 | Anspritzzone |
| 14 | Anspritzzone | 42 | Kante |
| 15 | innere Übergangskante | 43 | Hohlraum |
| 16 | Rundung | 44 | Aussenseite Einsatz |
| 17 | Rundungsanfang | 45 | Fittingausgang |
| 18 | dritter Kanalabschnitt | 46 | Verstärkungsrippen |
| 19 | Übergang | | |
| 20 | erste Übergangskante | Z | Mantellinie |
| 21 | Rundung | K | Kern |
| 22 | Übergang | α | Winkel |
| 23 | weitere Übergangskante | β | Winkel |
| 24 | Rundung | | |
| 25 | Kreuzungsbereich | B | Breite |
| 26 | Flanschelement | | |
| 27 | Kragenelement | P | Pfeil |
| 28 | Endseite | | |
| 29 | innerer Flächenabschnitt | | |

## Patentansprüche

1. Fitting (1), insbesondere aus Kunststoff, umfassend
eine Gehäusewand (2), die einen Durchflusskanal (3) begrenzt, welcher sich von einem Fittingeingang (4) zu einem Fittingausgang (5) erstreckt,
wobei der Durchflusskanal (3) einen sich entlang einer ersten Mittelachse (M6) erstreckenden ersten Kanalabschnitt (6) und einen sich entlang einer zweiten Mittelachse (M7) erstreckenden zweiten Kanalabschnitt (7) umfasst,
wobei im Bereich des Übergangs (8) zwischen dem ersten Kanalabschnitt (6) und dem zweiten Kanalabschnitt (7) ein Einsatz (9) in einen Durchbruch (11) durch die Gehäusewand (2) eingesetzt ist, welcher Einsatz (9) stoffschlüssig mit der Gehäusewand (2) in Verbindung steht,
wobei die Gehäusewand (2) im Bereich des Durchbruchs (11) eine Anspritzzone (14) aufweist, und wobei der Einsatz eine Anspritzzone (41) aufweist, wobei über die beiden Anspritzzonen (14, 41) der Einsatz (9) und die Gehäusewand (2) verbunden werden,
wobei die Gehäusewand (2) und/oder der Einsatz (9) Elemente (26, 27, 39, 40) aufweist, welche eine Vergrösserung des Flächeninhalts der Anspritzzonen (14, 41) ermöglichen, **dadurch gekennzeichnet,**
**dass** eines der besagten Elemente (26, 27, 39, 40) mindestens ein von der Gehäusewand (2) wegstehendes Flanschelement (26) mit einem Teil der gehäuseseitigen Anspritzzone (14) ist, wobei das Flanschelement (26) auf mindestens einer Endseite (28) des Durchbruchs (11) angeordnet ist, wobei eines der besagten Elemente (26, 27, 39, 40) auf Seite des Einsatzes (9) mindestens ein einsatzseitiges Flanschelement (39) mit einem Teil der einsatzseitigen Anspritzzone (41) ist, wobei die Flanschelemente (26, 39) sich winklig geneigt, insbesondere rechtwinklig, zur besagten Mittelachse (M6, M7) erstrecken
und
**dass** eines der besagten Elemente (26, 27, 39, 40) mindestens ein von der Gehäusewand (2) wegstehendes Kragenelement (27) mit einem Teil der gehäuseseitigen Anspritzzone (14) ist, wobei sich das Kragenelement (27) seitlich zum Durchflusskanal (3) bzw. zum Durchbruch (11) erstreckt, wobei eines der besagten Elemente (26, 27, 39, 40) auf Seite des Einsatzes (9) ein einsatzseitiges Kragenelement (40) mit einem Teil der einsatzseitigen Anspritzzone (41) ist.

2. Fitting (1) nach Anspruch 1, **dadurch gekennzeichnet, dass** auf jeder Endseite (28) des Durchbruchs (11) ein Flanschelement (26, 39) angeordnet ist.

3. Fitting (1) nach einem der vorhergehenden Ansprüche 1 oder 2, **dadurch gekennzeichnet, dass** die Anspritzzone (14, 41) des Flanschelementes (26 39) winklig geneigt, insbesondere rechtwinklig, zur besagten Mittelachse (M6, M7) orientiert ist und/oder dass die Anspritzzone (14, 41) des Flanschelementes (26, 39) im Wesentlichen als halbe Ringfläche ausgebildet ist.

4. Fitting (1) nach einem der vorhergehenden Ansprüche, **dadurch gekennzeichnet, dass** sich auf jeder Seite des Durchbruchs (11) ein Kragenelement (27, 40) sich vom Durchflusskanal (3) weg erstreckt.

5. Fitting (1) nach einem der vorhergehenden Ansprüche, **dadurch gekennzeichnet, dass** die Anspritzzone (14) des Kragenelementes (27) ein innerer Flächenabschnitt (29), der dem Durchflusskanal (3) zugewandt ist aufweist; und/oder dass die Anspritzzone (14) des Kragenelementes (27) ein äusserer Flächenabschnitt (30), der vom Durchflusskanal (3) weg liegt, aufweist.

6. Fitting nach Anspruch 5, **dadurch gekennzeichnet, dass** der innere Flächenabschnitt (29) und der äussere Flächenabschnitt (30) bei einer Kante (37) aufeinander treffen, wobei die Kante leicht gerundet oder scharfkantig ausgebildet ist.

7. Fitting (1) nach einem der vorhergehenden Ansprüche, **dadurch gekennzeichnet, dass** die Anspritzzone (14) des Kragenelementes (27), insbesondere der äussere Flächenabschnitt (30), zwei winklig zueinander geneigte Flächenteile (31, 32) aufweist, wobei der Winkel (α) zwischen den beiden Flächenteilen (31, 32) zwischen 90° und 145° oder zwischen 100° und 130° liegt, wobei die Kante (41) zwischen den beiden Flächenteilen vorzugsweise mit einer Rundung gerundet ausgebildet ist.

8. Fitting (1) nach Anspruch 7, **dadurch gekennzeichnet, dass** das weiter vom Durchflusskanal (3) entfernt liegende Flächenteil (32) im Querschnitt gesehen nach aussen hin abfallend ausgebildet ist, wobei bei der Anordnung von zwei dem Durchflusskanal gegenüberliegenden Kragenelementen (27) die weiter vom Durchflusskanal entfernt liegenden Flächenteile (30) von den zwei verschiedenen Kragenelementen (27) einen Winkel (β) von 170° bis 178° einschliessen.

9. Fitting (1) nach einem der vorhergehenden Ansprüche, **dadurch gekennzeichnet, dass** das besagte mindestens eine Element (26, 27, 39, 40) und die Anspritzzone (14, 41) derart angeordnet sind, dass diese den Durchbruch (11) im Wesentlichen vollständig umgeben.

10. Fitting (1) nach einem der vorhergehenden Ansprüche, **dadurch gekennzeichnet, dass** das besagte mindestens eine Element (26, 27, 39, 40) von der Aussenseite (35) der Gehäusewand (2) des Fittings bzw. der Aussenseite (44) des Einsatzes (9) nach aussen hin wegsteht; und/oder dass das besagte mindestens eine Element (26, 27, 39, 40) eine Breite (B) quer zur Mittelachse (M6, M7) aufweist, welche grösser als 50% des Innendurchmessers des Durchflusskanals (3) ist.

11. Fitting (1) nach einem der vorhergehenden Ansprüche, **dadurch gekennzeichnet, dass** die Anspritzzone (14, 41) des besagten mindestens eine Element (26, 27, 39, 40) innenseitig durch eine innere Begrenzungskante (33) und aussenseitig durch eine äussere Begrenzungskante (34) begrenzt ist, wobei sich eine Mantellinie (Z) auf der Anspritzzone (14, 41) quer zu den Begrenzungskanten (33, 34) erstreckt, welche Mantellinie (Z) eine Länge aufweist, die grösser als 50% des Innendurchmessers des Durchflusskanals (3) ist.

12. Fitting (1) nach einem der vorhergehenden Ansprüche, **dadurch gekennzeichnet, dass** eine Dichtfläche (10) sich mindestens teilweise entlang des Durchbruchs (11) erstreckt, derart, dass während der Herstellung des Einsatzes (9) in Zusammenarbeit mit einem Kern eines Spritzgiesswerkzeuges ein Eindringen vom Spritzmaterial in den Durchflusskanal (3) verhindert wird.

13. Fitting (1) nach Anspruch 12, **dadurch gekennzeichnet, dass** sich der Dichtfläche (10) ausserhalb des Durchflusskanals (3) die Anspritzzone (14, 41) einen Flächenbereich (38) aufweist, welcher bezüglich der Dichtfläche (10) versetzt angeordnet ist, wobei durch die versetzte Anordnung ein Hohlraum (15) geschaffen wird, in welchen Spritzmaterial bei der Herstellung des Einsatzes (9) einfliessen kann.

14. Fitting (1) nach einem der vorhergehenden Ansprüche, **dadurch gekennzeichnet, dass**
die beiden Mittelachsen (M6, M7) winklig geneigt, insbesondere rechtwinklig, zueinander stehen und die beiden Kanalabschnitte (6, 7) derart angeordnet sind, dass sich deren Mittelachsen (M6, M7) schneiden und
dass im Bereich des Übergangs (8) zwischen dem ersten Kanalabschnitt (6) und dem zweiten Kanalabschnitt (7) eine innere Übergangskante (15) vom ersten Kanalabschnitt (6) zum zweiten Kanalabschnitt (7) gebildet ist, welche Übergangskante (15) mit einer Rundung (16) gerundet ausgebildet ist,
wobei der Einsatz (9) gegenüber der Übergangskante (15) derart angeordnet ist, dass die Übergangskante (15) mit der Rundung (16) während der Herstellung des Fittings durch einen Durchbruch (11), der vom Einsatz (9) überdeckt wird, zugänglich ist.

15. Fitting (1) nach einem der vorhergehenden Ansprüche 1 bis 13, **dadurch gekennzeichnet, dass**
die beiden Mittelachsen (M6, M7) kollinear zueinander stehen und
dass das Fitting (1) einen dritten Kanalabschnitt (18) umfasst, welcher sich entlang einer dritten Mittelachse (M18) erstreckt, wobei die dritte Mittelachse (M18) winklig geneigt, insbesondere rechtwinklig, zur ersten und zur zweiten Mittelachse (M6, M7) verläuft,
wobei im Bereich des Übergangs (19) zwischen dem ersten Kanalabschnitt (6) und dem dritten Kanalabschnitt (13) eine erste innere Übergangskante (20) vom ersten Kanalabschnitt (6) zum dritten Kanalabschnitt (13) gebildet ist, welche Übergangskante (20) mit einer Rundung (21) gerundet ausgebildet ist,
wobei im Bereich des Übergangs (22) zwischen dem zweiten Kanalabschnitt (7) und dem dritten Kanalabschnitt (18) eine weitere innere Übergangskante (23) vom zweiten Kanalabschnitt (7) zum dritten Kanalabschnitt (13) gebildet ist, welche weitere Übergangskante (23) mit einer Rundung (24) gerundet ausgebildet ist,
und wobei sich der besagte Einsatz (11) mindestens von der Übergangskante (20) zwischen dem ersten und zweiten Kanalabschnitt (6, 7) bis hin zur Übergangskante (23) zwischen dem zweiten und dritten Kanalabschnitt (7, 18) erstreckt.

16. Spritzgiessverfahren zur Herstellung eines Fittings (1) nach einem der vorhergehenden Ansprüche, **dadurch gekennzeichnet,**
**dass** in einem ersten Schritt die Gehäusewand (2) ohne den Einsatz (11) hergestellt wird, wobei pro Kanalabschnitt (6, 7, 18) ein zylindrischer Kern (K1) bereitgestellt wird und wobei durch den Durchbruch (11), welcher vom Einsatz (9) überdeckt wird, ein zusätzlicher Kern (K2), insbesondere zur Bereitstellung der besagten Rundung (10) durch die Gehäusewand (2) in den Durchflusskanal (3) einragt, und
**dass** in einem zweiten Schritt mindestens ein Kern (K1) entlang des ersten und/oder des zweiten Kanalabschnittes (6, 7) in den Durchflusskanal (3) bis in Bereich des Durchbruches (12) eingeschoben wird, wobei der Kern (K1) derart in Kontakt mit der Dichtfläche (10) kommt, dass der Durchflusskanal (3) bezüglich des mit dem Einsatz (9) anzuspritzenden Spritzmaterial dicht verschlossen ist, und wobei der Durchbruch (12) mit dem Einsatz (11) zugespritzt wird.

17. Spritzgiessverfahren nach Anspruch 16, **dadurch gekennzeichnet, dass** die beiden Schritte in der gleichen Spritzgiessform ausgeführt werden.

## Claims

1. Fitting (1), in particular composed of plastic, comprising
a housing wall (2) which delimits a flow channel (3) which extends from a fitting inlet (4) to a fitting outlet (5),
wherein the flow channel (3) comprises a first channel portion (6) extending along a first central axis (M6) and a second channel portion (7) extending along a second central axis (M7),
wherein an insert (9) is inserted into a breakthrough (11) through the housing wall (2) in the region of the transition (8) between the first channel portion (6) and the second channel portion (7), which insert (9) is connected in a firmly bonded manner to the housing wall (2),
wherein the housing wall (2) has in the region of the breakthrough (11) an injection zone (14), and wherein the insert comprises an injection zone (41), wherein the insert (9) and the housing wall (2) are connected via the two injection zones (14, 41),
wherein the housing wall (2) and/or the insert (9) have/has elements (26, 27, 39, 40) which enable an enlargement of the surface area of the injection zones (14, 41), **characterized in that**
one of said elements (26, 27, 39, 40) is at least one flange element (26) which protrudes from the housing wall (2) with a part of the housing-side injection zone (14), wherein the flange element (26) is arranged on at least one end side (28) of the breakthrough (11), wherein one of said elements (26, 27, 39, 40) on the side of the insert (9) is at least one insert-side flange element (39) with a part of the insert-side injection zone (41), wherein the flange elements (26, 39) extends inclined at an angle, in particular at a right angle, to said central axis (M6, M7)
and
that one of said elements (26, 27, 39, 40) is at least one collar element (27) which protrudes from the housing wall (2) with a part of the housing-side injection zone (14), wherein the collar element (27) extends laterally to the flow channel (3) or to the breakthrough (11), respectively, wherein one of said elements (26, 27, 39, 40) on the side of the insert (9) is an insert-side collar element (40) with a part of the insert-side injection zone (41).

2. Fitting (1) according to Claim 1, **characterized in that** a flange element (26, 39) is arranged on each end side (28) of the breakthrough (11).

3. Fitting (1) according to any one of the preceding claims 1 or 2, **characterized in that** the injection zone (14, 41) of the flange element (26 39) is oriented inclined at an angle, in particular at a right angle, to said central axis (M6, M7) and/or that the injection zone (14, 41) of the flange element (26, 39) is formed substantially as a half annular surface.

4. Fitting (1) according to any one of the preceding claims, **characterized in that** a collar element (27, 40) extends away from the flow channel (3) on each side of the breakthrough (11).

5. Fitting (1) according to any one of the preceding claims, **characterized in that** the injection zone (14) of the collar element (27) is an inner surface portion (29) facing the flow channel (3) and/or that the injection zone (14) of the collar element (27) has an outer surface portion (30) which lies away from the flow channel (3).

6. Fitting (1) according to Claim 5, **characterized in that** the inner surface portion (29) and the outer surface portion (30) meet one another in the case at an edge (37), wherein the edge is formed to be slightly rounded or sharp-edged.

7. Fitting (1) according to any one of the preceding claims, **characterized in that** the injection zone (14) of the collar element (27), in particular the outer surface portion (30), comprises two surface parts (31, 32) inclined at an angle to one another, wherein the angle (α) between the two surface parts (31, 32) lies between 90° and 145° or between 100° and 130°, wherein the edge (41) between the two surface parts is preferably formed to be rounded with a rounding.

8. Fitting (1) according to Claim 7, **characterized in that** the surface part (32) which lies further away from the flow channel (3) is formed tapered toward the outside when viewed in cross-section, wherein, in the case of the arrangement of two collar elements (27) lying opposite the flow channel, the surface parts (30) of the two different collar elements (27) lying further away from the flow channel enclose an angle (β) of 170° to 178°.

9. Fitting (1) according to any one of the preceding claims, **characterized in that** said at least one element (26, 27, 39, 40) and the injection zone (14, 41) are arranged in such a manner that these substantially fully surround the breakthrough (11).

10. Fitting (1) according to any one of the preceding claims, **characterized in that** said at least one element (26, 27, 39, 40) protrudes outwards from the outside (35) of the housing wall (2) of the fitting or the outside (44) of the insert (9), respectively; and/or that said at least one element (26, 27, 39, 40) has a width (B) transverse to the central axis (M6, M7) which is greater than 50% of the inner diameter of the flow channel (3).

11. Fitting (1) according to any one of the preceding claims, **characterized in that** the injection zone (14, 41) of said at least one element (26, 27, 39, 40) is delimited on the inside by an inner delimiting edge (33) and on the outside by an outer delimiting edge (34), wherein a surface line (Z) extends on the injection zone (14, 41) transverse to the delimiting edges (33, 34), which surface line (Z) has a length which is greater than 50% of the inner diameter of the flow channel (3).

12. Fitting (1) according to any one of the preceding claims, **characterized in that** a sealing surface (10) extends at least partially along the breakthrough (11) in such a manner that a penetration of spray material into the flow channel (3) is prevented during the manufacture of the insert (9) in cooperation with a core of an injection moulding tool.

13. Fitting (1) according to Claim 12, **characterized in that** the sealing surface (10) outside the flow channel (3) the injection zone (14, 41) comprises a surface region (38) which is arranged offset with regard to the sealing surface (10), wherein, as a result of the offset arrangement, a cavity (15) is created into which spray material can flow during the manufacture of the insert (9).

14. Fitting (1) according to any one of the preceding claims, **characterized in that**
the two central axes (M6, M7) are inclined at an angle, in particular at a right angle, to one another and the two channel portions (6, 7) are arranged in such a manner that their central axes (M6, M7) intersect and
that, in the region of the transition (8) between the first channel portion (6) and the second channel portion (7), an inner transition edge (15) from the first channel portion (6) to the second channel portion (7) is formed, which transition edge (15) is formed to be rounded with a rounding (16),
wherein the insert (9) is arranged opposite the transition edge (15) in such a manner that the transition edge (15) is accessible with the rounding (16) during the production of the fitting through a breakthrough (11) which is covered by the insert (9).

15. Fitting (1) according to any one of preceding claims 1 to 13, **characterized in that**
the two central axes (M6, M7) are collinear to one another and
that the fitting (1) comprises a third channel portion (18) which extends along a third central axis (M18), wherein the third central axis (M18) runs inclined at an angle, in particular at a right angle, to the first and second central axis (M6, M7),
wherein, in the region of the transition (19) between the first channel portion (6) and the third channel portion (13), a first inner transition edge (20) from the first channel portion (6) to the third channel portion (13) is formed, which transition edge (20) is formed to be rounded with a rounding (21),
wherein, in the region of the transition (22) between the second channel portion (7) and the third channel portion (18), a further inner transition edge (23) from the second channel portion (7) to the third channel portion (13) is formed, which further transition edge (23) is formed to be rounded with a rounding (24),
and wherein said insert (11) extends at least from the transition edge (20) between the first and second channel portion (6, 7) up to the transition edge (23) between the second and third channel portion (7, 18).

16. Injection moulding method for producing a fitting (1) according to any one of the preceding claims, **characterized in that**
in a first step, the housing wall (2) is produced without the insert (11), wherein a cylindrical core (K1) is provided for each channel portion (6, 7, 18) and wherein an additional core (K2), in particular for the provision of said rounding (10)by the housing wall (2), projects into the flow channel (3) through the breakthrough (11) which is covered by the insert (9), and that
in a second step, at least one core (K1) is pushed along the first and/or the second channel portion (6, 7) into the flow channel (3) till into region of the breakthrough (12), wherein the core (K1) comes into contact with the sealing surface (10) in such a manner that the flow channel (3) is closed off in an impervious manner in terms of the spray material to be injected with the insert (9), and wherein the breakthrough (12) is closed by injection with the breakthrough (11).

17. Injection moulding method according to Claim 16, **characterized in that** the two steps are performed in the same injection mould.

## Revendications

1. Raccord (1), en particulier en plastique, comprenant
une paroi de boîtier (2) qui délimite un canal d'écoulement de fluide (3) qui s'étend depuis une entrée de raccord (4) jusqu'à une sortie de raccord (5),
le canal d'écoulement de fluide (3) comprenant une première portion de canal (6) s'étendant le long d'un premier axe médian (M6) et une deuxième portion de canal (7) s'étendant le long d'un deuxième axe médian (M7),
un insert (9) étant inséré dans un passage (11) à travers la paroi de boîtier (2) dans la région de la transition (8) entre la première portion de canal (6) et la deuxième portion de canal (7), lequel insert (9) est en liaison de matière avec la paroi de boîtier (2),
la paroi de boîtier (2) présentant, dans la région du passage (11), une zone de moulage par injection (14), et l'insert présentant une zone de moulage par injection (41), l'insert (9) et la paroi de boîtier (2) étant raccordés par le biais des deux zones de moulage par injection (14, 41),
la paroi de boîtier (2) et/ou l'insert (9) présentant des éléments (26, 27, 39, 40) qui permettent d'augmenter la superficie des zones de moulage par injection (14, 41),
**caractérisé en ce que**
l'un desdits éléments (26, 27, 39, 40) est au moins un élément de bride (26) faisant saillie depuis la paroi de boîtier (2), avec une partie de la zone de moulage par injection côté boîtier (14), l'élément de bride (26) étant disposé sur au moins un côté d'extrémité (28) du passage (11), l'un desdits éléments (26, 27, 39, 40) côté insert (9) étant au moins un élément de bride côté insert (39) avec une partie de la zone de moulage par injection côté insert (41), les éléments de bride (26, 39) s'étendant sous forme inclinée suivant un certain angle, en particulier à angle droit, par rapport audit axe médian (M6, M7) et
l'un desdits éléments (26, 27, 39, 40) étant au moins un élément de collet (27) faisant saillie depuis la paroi de boîtier (2) avec une partie de la zone de moulage par injection côté boîtier (14), l'élément de collet (27) s'étendant latéralement par rapport au canal d'écoulement de fluide (3) ou par rapport au passage (11), l'un desdits éléments (26, 27, 39, 40) côté insert (9) étant un élément de collet côté insert (40) avec une partie de la zone de moulage par injection côté insert (41).

2. Raccord (1) selon la revendication 1, **caractérisé en ce que** sur chaque côté d'extrémité (28) du passage (11) est disposé un élément de bride (26, 39) .

3. Raccord (1) selon l'une quelconque des revendications précédentes 1 ou 2, **caractérisé en ce que** la zone de moulage par injection (14, 41) de l'élément de bride (26, 39) est orientée de manière inclinée suivant un certain angle, en particulier à angle droit, par rapport audit axe médian (M6, M7) et/ou **en ce que** la zone de moulage par injection (14, 41) de l'élément de bride (26, 39) est réalisée essentiellement sous forme de surface semi-annulaire.

4. Raccord (1) selon l'une quelconque des revendications précédentes, **caractérisé en ce qu'**un élément de collet (27, 40) fait saillie depuis le canal d'écoulement de fluide (3) de chaque côté du passage (11).

5. Raccord (1) selon l'une quelconque des revendications précédentes, **caractérisé en ce que** la zone de moulage par injection (14) de l'élément de collet (27) présente une portion de surface intérieure (29) qui est tournée vers le canal d'écoulement de fluide (3) ; et/ou **en ce que** la zone de moulage par injection (14) de l'élément de collet (27) présente une portion de surface extérieure (30) qui est détournée du canal d'écoulement de fluide (3).

6. Raccord selon la revendication 5, **caractérisé en ce que** la portion de surface intérieure (29) et la portion de surface extérieure (30) sont réunies au niveau d'une arête (37), l'arête étant réalisée sous forme légèrement arrondie ou à angle vif.

7. Raccord (1) selon l'une quelconque des revendications précédentes, **caractérisé en ce que** la zone de moulage par injection (14) de l'élément de collet (27), en particulier la portion de surface extérieure (30), présente deux parties de surface (31, 32) inclinées suivant un certain angle l'un par rapport à l'autre, l'angle (α) entre les deux parties de surface (31, 32) étant compris entre 90° et 145° ou entre 100° et 130°, l'arête (41) entre les deux parties de surface étant de préférence réalisée sous forme arrondie avec un arrondi.

8. Raccord (1) selon la revendication 7, **caractérisé en ce que** la partie de surface (32) la plus éloignée du canal d'écoulement de fluide (3), en section transversale, est réalisée sous forme descendant vers l'extérieur, et lors de l'agencement de deux éléments de collet (27) opposés au canal d'écoulement de fluide, les parties de surface (30) des deux éléments de collet différents (27) les plus éloignées du canal d'écoulement de fluide formant un angle (β) de 170° à 178°.

9. Raccord (1) selon l'une quelconque des revendications précédentes, **caractérisé en ce que** ledit au moins un élément (26, 27, 39, 40) et la zone de moulage par injection (14, 41) sont disposés de telle sorte qu'ils entourent essentiellement complètement le passage (11).

10. Raccord (1) selon l'une quelconque des revendications précédentes, **caractérisé en ce que** ledit au moins un élément (26, 27, 39, 40) fait saillie vers l'extérieur depuis le côté extérieur (35) de la paroi de boîtier (2) du raccord ou du côté extérieur (44) de l'insert (9) ; et/ou **en ce que** ledit au moins un élément (26, 27, 39, 40) présente une largeur (B) transversale à l'axe médian (M6, M7) qui est supérieure à 50 % du diamètre intérieur du canal d'écoulement de fluide (3) .

11. Raccord (1) selon l'une quelconque des revendications précédentes, **caractérisé en ce que** la zone de moulage par injection (14, 41) dudit au moins un élément (26, 27, 39, 40) est limitée du côté intérieur par une arête de limitation intérieure (33) et du côté extérieur par une arête de limitation extérieure (34), une ligne d'enveloppe (Z) s'étendant sur la zone de moulage par injection (14, 41) transversalement aux arêtes de limitation (33, 34), laquelle ligne d'enveloppe (Z) présente une longueur qui est supérieure à 50 % du diamètre intérieur du canal d'écoulement de fluide (3).

12. Raccord (1) selon l'une quelconque des revendications précédentes, **caractérisé en ce qu'**une surface d'étanchéité (10) s'étend au moins en partie le long du passage (11) de telle sorte que pendant la fabrication de l'insert (9) en coopération avec un noyau d'un outil de moulage par injection, on évite une pénétration de matériau d'injection dans le canal d'écoulement de fluide (3).

13. Raccord (1) selon la revendication 12, **caractérisé en ce que** la surface d'étanchéité (10) à l'extérieur du canal d'écoulement de fluide (3) la zone de moulage par injection (14, 41) présente une région de surface (38) qui est disposée de manière décalée par rapport à la surface d'étanchéité (10), une cavité (15) étant créée par l'agencement décalé, dans laquelle cavité peut s'écouler du matériau d'injection lors de la fabrication de l'insert (9).

14. Raccord (1) selon l'une quelconque des revendications précédentes, **caractérisé en ce que** les deux axes médians (M6, M7) sont inclinés suivant un certain angle, en particulier un angle droit, l'un par rapport à l'autre, et les deux portions de canal (6, 7) sont disposées de telle sorte que leurs axes médians (M6, M7) se croisent et
**en ce que** dans la région de la transition (8) entre la première portion de canal (6) et la deuxième portion de canal (7), une arête de transition intérieure (15) est formée de la première portion de canal (6) à la deuxième portion de canal (7), laquelle arête de transition (15) est réalisée sous forme arrondie avec un arrondi (16),
l'insert (9) étant disposé par rapport à l'arête de transition (15) de telle sorte que l'arête de transition (15) avec l'arrondi (16) soit accessible pendant la fabrication du raccord à travers un passage (11) qui est recouvert par l'insert (9).

15. Raccord (1) selon l'une quelconque des revendications précédentes 1 à 13, **caractérisé en ce que**
les deux axes médians (M6, M7) sont colinéaires et **en ce que** le raccord (1) comprend une troisième portion de canal (18) qui s'étend le long d'un troisième axe médian (M18), le troisième axe médian (M18) s'étendant de manière inclinée suivant un certain angle, en particulier à angle droit par rapport au premier et au deuxième axe médian (M6, M7),
dans la région de la transition (19) entre la première portion de canal (6) et la troisième portion de canal (13), une première arête de transition intérieure (20) étant formée de la première portion de canal (6) à la troisième portion de canal (13), laquelle arête de transition (20) est réalisée sous forme arrondie avec un arrondi (21),
dans la région de la transition (22) entre la deuxième portion de canal (7) et la troisième portion de canal (18), une arête de transition intérieure supplémentaire (23) étant formée de la deuxième portion de canal (7) à la troisième portion de canal (13), laquelle arête de transition supplémentaire (23) est réalisée sous forme arrondie avec un arrondi (24),
et ledit insert (11) s'étendant au moins depuis l'arête de transition (20) entre la première et la deuxième portion de canal (6, 7) jusqu'à l'arête de transition (23) entre la deuxième et la troisième portion de canal (7, 18).

16. Procédé de moulage par injection pour la fabrication d'un raccord (1) selon l'une quelconque des revendications précédentes, **caractérisé en ce que**
dans une première étape, la paroi de boîtier (2) est fabriquée sans insert (11), un noyau cylindrique (K1) étant fourni pour chaque portion de canal (6, 7, 18) et un noyau supplémentaire (K2), en particulier pour fournir ledit arrondi (10), pénétrant à travers le passage (11) qui est recouvert par l'insert (9), à travers la paroi de boîtier (2) dans le canal d'écoulement de fluide (3), et
**en ce que** dans une deuxième étape, au moins un noyau (K1) est enfoncé le long de la première et/ou de la deuxième portion de canal (6, 7) dans le canal d'écoulement de fluide (3) jusque dans la région du passage (12), le noyau (K1) venant en contact avec la surface d'étanchéité (10) de telle sorte que le canal d'écoulement de fluide (3) soit fermé hermétiquement par rapport au matériau d'injection devant être moulé par injection avec l'insert (9), et le passage (12) étant surmoulé avec l'insert (11).

17. Procédé de moulage par injection selon la revendication 16, **caractérisé en ce que** les deux étapes sont effectuées dans le même moule de moulage par injection.
